# EUROPEAN PATENT SPECIFICATION

(11) **EP 2 939 084 B1**
(45) Date of publication and mention of the grant of the patent: **08.04.2020**
(21) Application number: 13803276.8
(22) Date of filing: 27.11.2013
(51) Int. Cl.: G06F 3/01, G06F 3/0481

(54) **INFORMATION PROCESSING APPARATUS, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
APPAREIL DE TRAITEMENT D'INFORMATIONS, PROCÉDÉ DE TRAITEMENT D'INFORMATIONS ET PROGRAMME

(30) Priority: 27.12.2012 JP 2012285025
(43) Date of publication of application: 04.11.2015
(73) Proprietor: Sony Corporation, Tokyo 108-0075 (JP)
(72) Inventor: OHMURA, Junki, Tokyo 108-0075 (JP); KOHNO, Michinari, Tokyo 108-0075 (JP); IKEDA, Takuo, Tokyo 108-0075 (JP); OKADA, Kenichi, Tokyo 108-0075 (JP)
(74) Representative: MFG Patentanwälte Meyer-Wildhagen Meggle-Freund Gerhard PartG mbB
(86) International application number: PCT/JP2013/006979
(87) International publication number: WO 2014/103167

(56) References cited:
- US-A1- 2002 080 180
- US-A1- 2007 057 966
- US-A1- 2009 027 337
- US-A1- 2010 053 151
- US-A1- 2010 313 124
- US-A1- 2012 302 289

## Description

### Technical Field

The present disclosure relates to an information processing apparatus, an information processing method, and a program.

### Background Art

In recent years, a user interface (UI) that receives an user input via an image from a video camera has been proposed.

As one example, JP 2002-196855A discloses a method of superimposing object images for UI purposes on an image in which a mirror image of a user appears and carries out an application process associated with an object image selected by movement of the user's hand. JP 2005-216061A meanwhile discloses a method which eliminates the trouble of making initial settings, such as setting a camera angle, in a UI which uses camera images by determining the position of the user's head and hands in an input image and automatically displaying an object image in the vicinity of the determined position. Whereas US 2012/302289 relates to a mobile terminal capable of controlling an operation using a gesture input in a state of displaying an augmented reality screen through a head mounted display and a method of controlling an operation thereof. US 2010/053151 A1, US 2007/057966 A1, US 2010/313124 A1 and US 2009/027337 A1 relate to the interaction of a user with objects displayed on a user interface.

### Citation List

### Patent Literature

PTL 1: JP 2002-196855A
PTL 2: JP 2005-216061A
PTL 3: US 2012/302289

### Summary

### Technical Problem

However, the screen region in the vicinity of the head or hands of the user is limited. This means that with the method disclosed in JP 2005-216061A, when a large number of selectable objects are provided in a UI, the screen becomes crowded with such objects, which can conversely cause a drop in usability.

Accordingly, it is desirable to realize an improved UI capable of avoiding a drop in usability due to crowding of the screen, even when a large number of selectable objects are provided.

### Solution to Problem

The invention is as set out in the independent claims, further aspects of the invention are outlined in the dependent claims. Embodiments that do not fall within the scope of the claims do not describe part of the invention. According to one aspect, an information processing system is described that includes processing circuitry configured to control a movement of a UI object on a display screen from a pre-recognition position toward a post-recognition position in response to recognition of an operation object initiated by a user, wherein the post-recognition position is spatially related to a displayed position of a predetermined displayed feature, wherein the predetermined displayed feature is an image derived from a camera-captured image.

According to another aspect, an information processing method is described that includes
controlling with processing circuitry a movement of a UI object on a display screen from a pre-recognition position toward a post-recognition position in response to recognition of an operation object initiated by a user, wherein the post-recognition position is spatially related to a displayed position of a predetermined displayed feature, and the predetermined displayed feature is an image derived from a camera-captured image.

According to another aspect, a non-transitory computer readable medium is described that includes computer readable instructions that when executed by a processing circuitry perform a method, the method including
controlling with the processing circuitry a movement of a UI object on a display screen from a pre-recognition position toward a post-recognition position in response to recognition of an operation object initiated by a user, wherein the post-recognition position is spatially related to a displayed position of a predetermined displayed feature, and the predetermined displayed feature is an image derived from a camera-captured image.

### Advantageous Effects

According to the above embodiments of the present disclosure, a UI capable of avoiding a drop in usability due to crowding of the screen, even when a large number of selectable objects are provided, is realized.

### Brief Description of Drawings

[fig.1] Fig. 1 is a diagram useful in explaining an overview of an information processing apparatus according to a first embodiment of the present disclosure.
[fig.2]Fig. 2 is a diagram useful in explaining an overview of an information processing apparatus according to a second embodiment of the present disclosure.
[fig.3]Fig. 3 is a block diagram showing an example hardware configuration of the information processing apparatus according to the first embodiment.
[fig.4]Fig. 4 is a block diagram showing an example configuration of logical functions of the information processing apparatus according to the first embodiment.
[fig.5]Fig. 5 is a diagram useful in explaining one example of the result of image recognition.
[fig.6]Fig. 6 is a diagram useful in explaining a first example of another gesture that may be recognized.
[fig.7]Fig. 7 is a diagram useful in explaining a second example of another gesture that may be recognized.
[fig.8]Fig. 8 is a diagram useful in explaining a third example of another gesture that may be recognized.
[fig.9]Fig. 9 is a diagram useful in explaining a fourth example of another gesture that may be recognized.
[fig.10]Fig. 10 is a diagram useful in explaining a fifth example of another gesture that may be recognized.
[fig.11]Fig. 11 is a diagram useful in explaining a sixth example of another gesture that may be recognized.
[fig.12]Fig. 12 is a diagram useful in explaining a seventh example of another gesture that may be recognized.
[fig.13]Fig. 13 is a diagram useful in explaining a first example of UI objects.
[fig. 14]Fig. 14 is a diagram useful in explaining a second example of UI objects.
[fig.15]Fig. 15 is a diagram useful in explaining a first example of a mode of approach toward the user of UI objects.
[fig.16]Fig. 16 is a diagram useful in explaining a second example of a mode of approach toward the user of UI objects.
[fig.17]Fig. 17 is a diagram useful in explaining a third example of a mode of approach toward the user of UI objects.
[fig.18]Fig. 18 is a diagram useful in explaining a fourth example of a mode of approach toward the user of UI objects.
[fig.19]Fig. 19 is a diagram useful in explaining an example of priority data corresponding to the example shown in Fig. 17.
[fig.20]Fig. 20 is a diagram useful in explaining an example of priority data corresponding to the example shown in Fig. 18.
[fig.21]Fig. 21 is a diagram useful in explaining a fifth example of a mode of approach toward the user of UI objects.
[fig.22]Fig. 22 is a diagram useful in explaining a first example of an operation event.
[fig.23]Fig. 23 is a diagram useful in explaining a second example of an operation event.
[fig.24]Fig. 24 is a diagram useful in explaining a third and fourth examples of an operation event.
[fig.25]Fig. 25 is a diagram useful in explaining a fifth example of an operation event.
[fig.26]Fig. 26 is a diagram useful in explaining a sixth example of an operation event.
[fig.27]Fig. 27 is a diagram useful in explaining a seventh and eighth examples of an operation event.
[fig.28]Fig. 28 is a diagram useful in explaining a ninth example of an operation event.
[fig.29]Fig. 29 is a diagram useful in explaining a first example of an operation scenario involving a plurality of operation objects.
[fig.30]Fig. 30 is a diagram useful in explaining a second example of an operation scenario involving a plurality of operation objects.
[fig.31]Fig. 31 is a diagram useful in explaining a third example of an operation scenario involving a plurality of operation objects.
[fig.32]Fig. 32 is a diagram useful in explaining a first example of the window composition of an output image.
[fig.33]Fig. 33 is a diagram useful in explaining a second example of the window composition of an output image.
[fig.34]Fig. 34 is the former half of a flowchart showing an example of the flow of processing according to the first embodiment.
[fig.35]Fig. 35 is the latter half of the flowchart showing an example of the flow of processing according to the first embodiment.
[fig.36]Fig. 36 is a block diagram showing an example hardware configuration of the information processing apparatus according to the second embodiment.
[fig.37]Fig. 37 is a diagram useful in explaining an example of a operation scenario in the second embodiment.

### Description of Embodiments

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The following description is given in the order indicated below.
1. Overview
2. First Embodiment
2-1. Example Hardware Configuration
2-2. Example Functional Configuration
2-3. Mode Of Approach of UI Objects
2-4. Various Examples of Operation Events
2-5. Incorporation of a Plurality of Operation Objects
2-6. Example Window Compositions
2-7. Example Processing Flow
3. Second Embodiment
4. Conclusion

### <1. Overview>

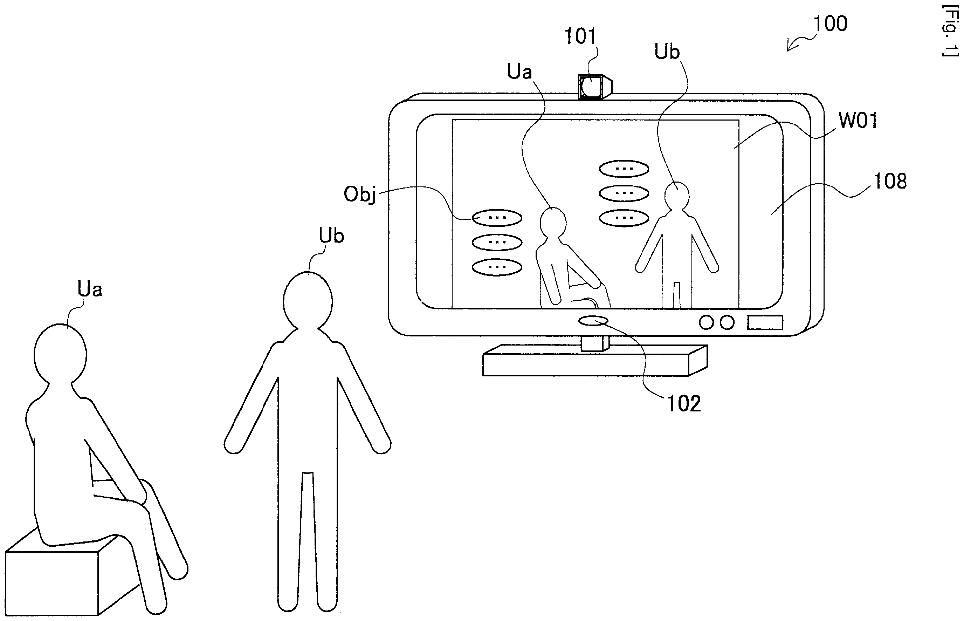

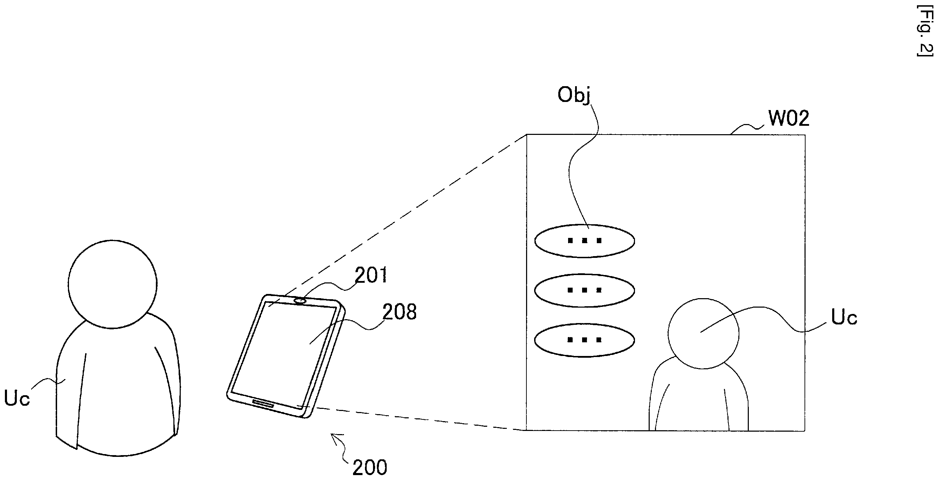

First, an overview of an information processing apparatus to which the technology according to an embodiment of the present disclosure can be applied will be described with reference to Figs. 1 and 2. The technology according to an embodiment of the present disclosure can be applied to a variety of apparatuses and systems that use an image in which a user appears as part of a user interface. As examples, the technology according to an embodiment of the present disclosure can be applied to a digital home appliance such as a television apparatus. The technology according to an embodiment of the present disclosure can also be applied to a terminal apparatus such as a PC (Personal Computer), a smartphone, a PDA (Personal Digital Assistant), or a game console. The technology according to an embodiment of the present disclosure can also be applied to a special-purpose apparatus such as an amusement apparatus.

Fig. 1 is a diagram useful in explaining an overview of an information processing apparatus 100 according to a first embodiment of the present disclosure. As shown in Fig. 1, the information processing apparatus 100 is a television apparatus. The information processing apparatus 100 includes a camera 101, a microphone 102, and a display 108. The camera 101 picks up images of users who are looking at the display 108 of the information processing apparatus 100. The microphone 102 picks up voice samples produced by such users. The display 108 displays images generated by the information processing apparatus 100. The images displayed by the display 108 may include user interface (UI) images in addition to content images. In the example in Fig. 1, users Ua and Ub are looking at the display 108. On the display 108, a UI image W01 is displayed. The UI image W01 is generated using a picked-up image picked up by the camera 101 and realizes a so-called "mirror image" display. A plurality of UI objects Obj are superimposed on the UI image W01. The users Ua and Ub may interact with the information processing apparatus 100 by operating the UI objects Obj via various gestures using their bodies. A voice command inputted via the microphone 102 into the information processing apparatus 100 may also be used to supplement interaction with the information processing apparatus 100.

Fig. 2 is a diagram useful in explaining an overview of an information processing apparatus 200 according to a second embodiment of the present disclosure. As shown in Fig. 2, the information processing apparatus 200 is a tablet PC. The information processing apparatus 200 includes a camera 201, a microphone 202, and a display 208. The camera 201 picks up images of users who are looking at the display 208 of the information processing apparatus 200. The microphone 202 picks up voice samples produced by such users. The display 208 displays images generated by the information processing apparatus 200. The images displayed by the display 208 may include user interface (UI) images in addition to content images. In the example in Fig. 2, a user Uc is looking at the display 208. On the display 208, a UI image W02 is displayed. The UI image W02 is generated using a picked-up image picked up by the camera 201 and realizes a so-called "mirror image" display. A plurality of UI objects Obj are also superimposed on the UI image W02. The user Uc may interact with the information processing apparatus 200 by operating the UI objects Obj via various gestures that use the body.

According to existing methods, the UI objects operated by the user may be automatically laid out in the vicinity of the head or hand of the user in the image. However, since the screen region in the vicinity of the head or hand of the user is limited, when a plurality of UI objects are provided, there is the risk of such UI objects being congested in the vicinity of the user. If the UI objects are congested in a limited screen region, it becomes difficult to select the individual UI objects, which can conversely cause a drop in usability. For this reason, the information processing apparatuses 100 and 200 avoid such drop in usability in accordance with the framework described in detail in the following sections.

### <2. First Embodiment>

### <2-1. Example Hardware Configuration>

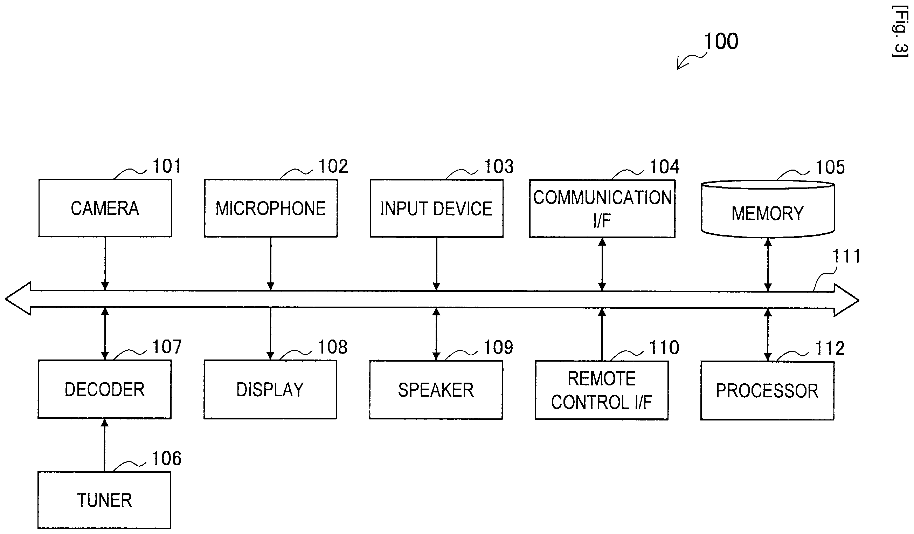

Fig. 3 is a block diagram showing an example hardware configuration of the information processing apparatus 100. As shown in Fig. 3, the information processing apparatus 100 includes the camera 101, the microphone 102, an input device 103, a communication interface (I/F) 104, a memory 105, a tuner 106, a decoder 107, a display 108, a speaker 109, a remote control I/F 110, a bus 111, and a processor 112.

### (1) Camera

The camera 101 includes an image pickup element such as a CCD (Charge Coupled Device) or a CMOS (Complementary Metal Oxide Semiconductor) and picks up images. The images picked up by the camera 101 (frames that construct video) are treated as input images for processing by the information processing apparatus 100.

### (2) Microphone

The microphone 102 picks up a voice sample produced by a user and generates a voice signal. The voice signal generated by the microphone 102 is able to be treated as an input voice intended for voice recognition by the information processing apparatus 100. The microphone 102 may be an omnidirectional microphone or a microphone with fixed or variable directionality.

### (3) Input Device

The input device 103 is a device used by the user to directly operate the information processing apparatus 100. As examples, the input device 103 may include buttons, switches, dials, and the like disposed on the housing of the information processing apparatus 100. On detecting a user input, the input device 103 generates an input signal corresponding to the detected user input.

### (4) Communication Interface

The communication I/F 104 acts as an intermediary for communication between the information processing apparatus 100 and another apparatus. The communication I/F 104 supports an arbitrary wireless communication protocol or wired communication protocol and establishes a communication connection with the other apparatus.

### (5) Memory

The memory 105 is constructed of a storage medium such as a semiconductor memory or a hard disk drive and stores programs and data for processing by the information processing apparatus 100, as well as content data. As one example, the data stored by the memory 105 may include characteristic data used for image recognition and voice recognition, described later. Note that some or all of the programs and data described in the present specification may not be stored by the memory 105 and instead may be acquired from an external data source (as examples, a data server, network storage, or an externally-attached memory).

### (6) Tuner

The tuner 106 extracts and demodulates a content signal on a desired channel from a broadcast signal received via an antenna (not shown). The tuner 106 then outputs the demodulated content signal to the decoder 107.

### (7) Decoder

The decoder 107 decodes content data from the content signal inputted from the tuner 106. The decoder 107 may decode content data from a content signal received via the communication I/F 104. Content images may be generated based on the content data decoded by the decoder 107.

### (8) Display

The display 108 has a screen constructed of an LCD (Liquid Crystal Display), an OLED (Organic Light-Emitting Diode), a CRT (Cathode Ray Tube), or the like and displays images generated by the information processing apparatus 100. As examples, content images and UI images that were described with reference to Figs. 1 and 2 may be displayed on the screen of the display 108.

### (9) Speaker

The speaker 109 has a diaphragm and circuit elements such as an amplifier and outputs audio based on an output voice signal generated by the information processing apparatus 100. The volume of the speaker 109 is variable.

### (10) Remote Control Interface

The remote control I/F 110 is an interface that receives a remote control signal (an infrared signal or other wireless signal) transmitted from a remote controller used by the user. On detecting a remote control signal, the remote control I/F 110 generates an input signal corresponding to the detected remote control signal.

### (11) Bus

The bus 111 connects the camera 101, the microphone 102, the input device 103, the communication I/F 104, the memory 105, the tuner 106, the decoder 107, the display 108, the speaker 109, the remote control I/F 110, and the processor 112 to each other.

### (12) Processor

As examples, the processor 112 may be a CPU (Central Processing Unit) or a DSP (Digital Signal Processor). By executing a program stored in the memory 105 or on another storage medium, the processor 112 causes the information processing apparatus 100 to function in various ways as described later.

### <2-2. Example Functional Configuration>

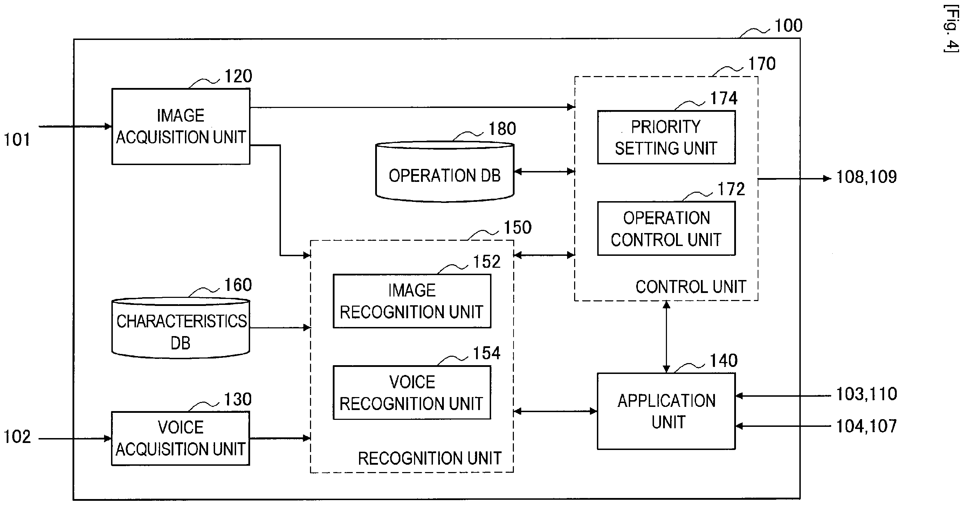

Fig. 4 is a block diagram showing an example configuration of logical functions realized by the memory 105 and the processor 112 of the information processing apparatus 100 shown in Fig. 3. As shown in Fig. 4, the information processing apparatus 100 includes an image acquisition unit 120, a voice acquisition unit 130, an application unit 140, a recognition unit 150, a characteristics database (DB) 160, a control unit 170, and an operation DB 180. The recognition unit 150 includes an image recognition unit 152 and a voice recognition unit 154. The control unit 170 includes an operation control unit 172 and a priority setting unit 174.

### (1) Image Acquisition Unit

The image acquisition unit 120 acquires an image picked up by the camera 101 as an input image. The input image is typically an individual frame in a series of frames that construct video in which users appear. The image acquisition unit 120 then outputs the acquired input image to the recognition unit 150 and the control unit 170.

### (2) Voice Acquisition Unit

The voice acquisition unit 130 acquires the voice signal generated by the microphone 102 as an input voice. The voice acquisition unit 130 then outputs the acquired input voice to the recognition unit 150. Note that processing of an input voice may be omitted from the present embodiment.

### (3) Application Unit

The application unit 140 carries out various application functions of the information processing apparatus 100. As examples, a television program reproduction function, an electronic program guide display function, a recording setting function, a content reproduction function, a content searching function, and an Internet browsing function may be carried out by the application unit 140. The application unit 140 outputs application images (which may include content images) and audio which have been generated via the application function to the control unit 170.

In the present embodiment, at least some of the processes carried out by the application unit 140 are associated with UI objects laid out on a UI image. Such processes may be carried out in response to operation events that involve the associated UI objects. The processes that may be carried out via UI objects may include arbitrary processes, such as setting a channel and volume for a television program reproduction function, setting a channel and time period for an electronic program guide display function, selecting content for a content reproduction function, and designating a search keyword and carrying out a search for a content search function.

### (4) Image Recognition Unit

The image recognition unit 152 recognizes an operation object used by the user in an input image inputted from the image acquisition unit 120. In the present embodiment, the operation object is the user's hand. A user's hand that makes a specified shape (such as a shape where the hand is open, a gripping shape, or a shape of pointing with a finger) may be used as the operation object. In other embodiments, instead of the user's hand, the user's foot or a known actual object held by the user may be used as the operation object. As one example, the image recognition unit 152 may recognize the hand region in the input image by matching image characteristic values extracted from the input image and image characteristic values an operation object stored in advance by the characteristics DB 160. In the same way, the image recognition unit 152 may recognize a face region in the input image.

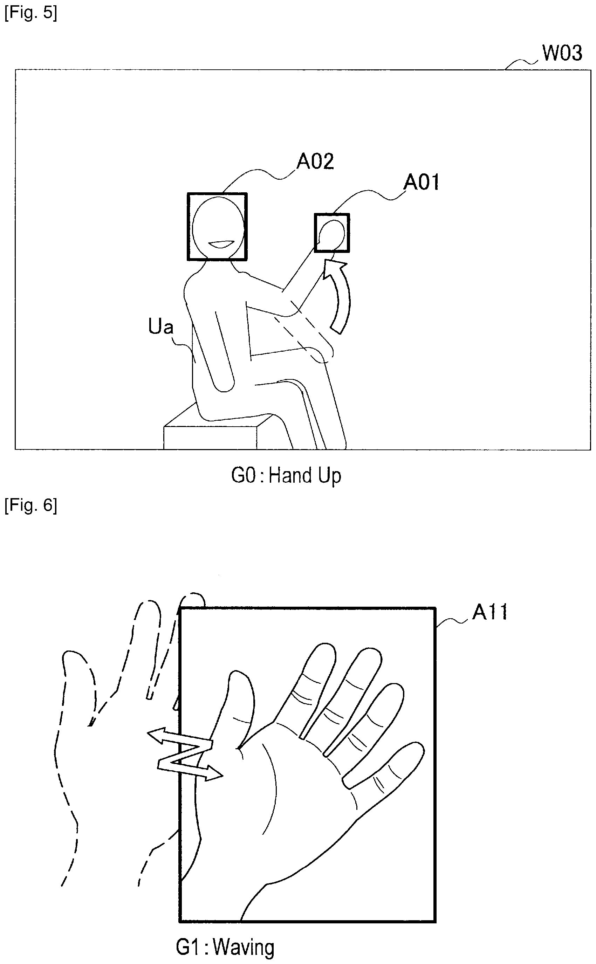

Fig. 5 is a diagram useful in explaining one example of the result of image recognition by the image recognition unit 152. As shown in Fig. 5, the user Ua appears in the input image W03. The user Ua is facing the camera 101 and raising his left hand. By matching image characteristic values or using another known method, the image recognition unit 152 is capable of recognizing a hand region A01 and a face region A02 in the input image W03. The image recognition unit 152 then outputs position data showing the positions in the image of such recognized regions to the control unit 170.

As one example, the image recognition unit 152 may identify the user by matching an image part (facial image) of the face region recognized in an input image against facial image data of known users stored in advance by the characteristics DB 160. As examples, the user identification result produced by the image recognition unit 152 can be used to personalize menus displayed in a UI image, or by the application unit 140 to recommend content, and to make adjustments to the voice recognition.

In the present embodiment, the image recognition unit 152 also recognizes gestures of the users appearing in an input image. In the example in Fig. 5, the image recognition unit 152 recognizes a gesture G0 by monitoring movement of a hand region A01 of the user. The gesture G0 is a gesture ("Hand Up") of raising the hand. Note that in the present specification, the expression "gestures" is assumed to also include static "poses" (forms) that do not involve dynamic movement of the user's body. On recognizing a user gesture, the image recognition unit 152 outputs gesture data showing the recognized type of gesture to the control unit 170.

Example of gestures that can be recognized by the image recognition unit 152 will now be described with reference to Figs. 6 to 12.

In Fig. 6, a hand region A11 is shown. The hand region A11 is being waved to the left and right at short intervals. From such movement of the user's hand, the image recognition unit 152 can recognize a gesture G1. The gesture G1 is a gesture ("Waving") of waving the hand.

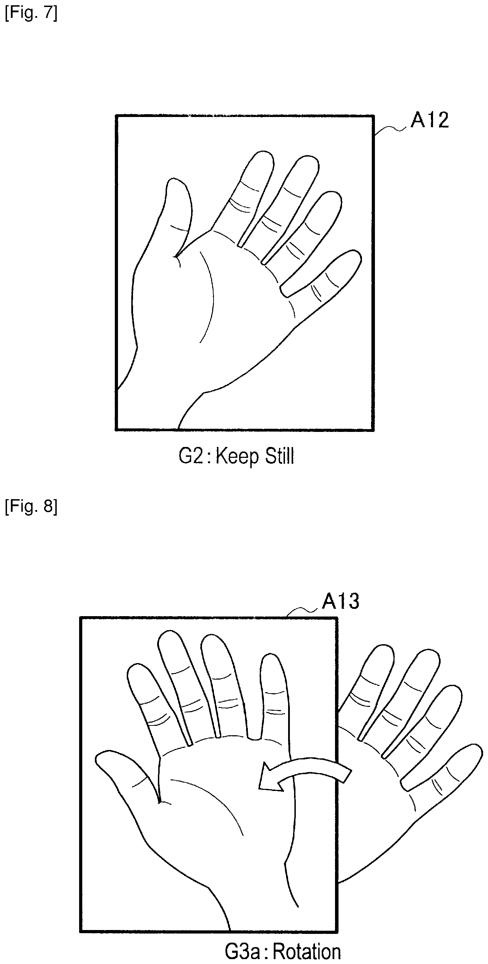

In Fig. 7, a hand region A12 is shown. The hand region A12 is substantially stationary in the input image for a specific length of time. From such stationary state of the user's hand, the image recognition unit 152 can recognize a gesture G2. The gesture G2 ("Keep Still") is a gesture of keeping the hand still.

In Fig. 8, a hand region A13 is shown. The user's hand appearing in the hand region A13 is rotating in the counterclockwise direction around a center point in a vicinity of the wrist. From such movement of the user's hand, the image recognition unit 152 can recognize a gesture G3a. The gesture G3a ("Rotation") is a gesture of rotating the hand.

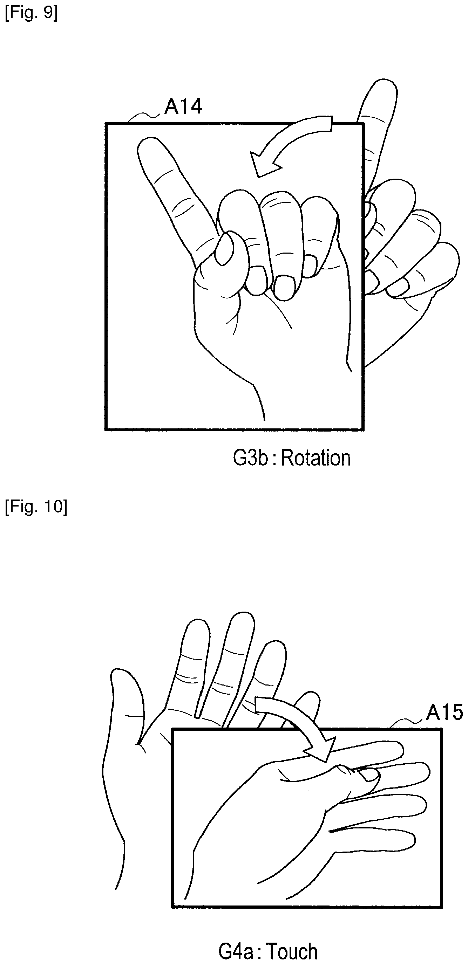

In Fig. 9, a hand region A14 is shown. The user's hand appearing in the hand region A14 is in a shape where fingers aside from the index finger are bent over and the hand is rotating in the counterclockwise direction around a center point in a vicinity of the wrist. From such movement of the user's hand, the image recognition unit 152 recognizes a gesture G3b. The gesture G3b ("Rotation") is also a gesture of rotating the hand.

In Fig. 10, a hand region A15 is shown. The hand of the user appearing in the hand region A15 is moving so as to bend the wrist to the right. From such movement of the user's hand, the image recognition unit 152 can recognize a gesture G4a. The gesture G4a ("Touch") is a gesture of touching an object.

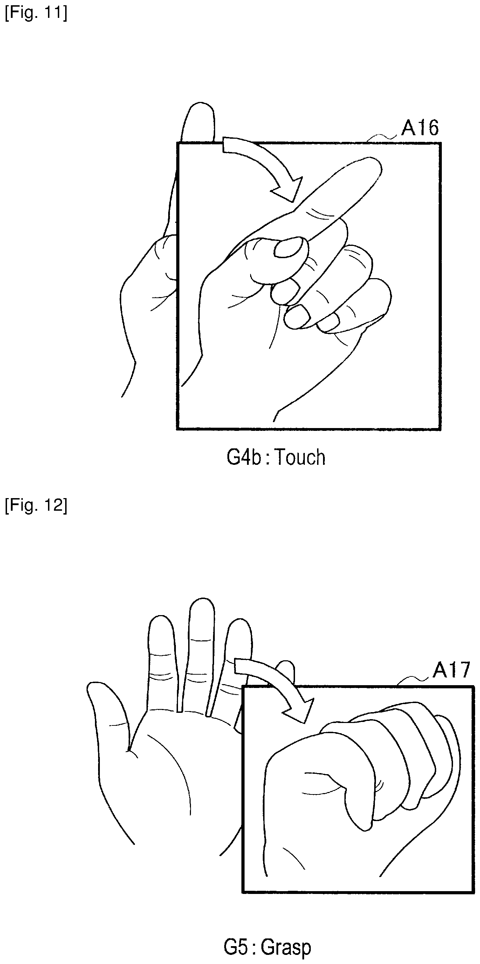

In Fig. 11, a hand region A16 is shown. The hand of the user appearing in the hand region A16 is moving so as to bend the wrist forward with the hand in a shape where all of the fingers aside from the index finger are bent over. From such movement of the user's hand, the image recognition unit 152 can recognize a gesture G4b. The gesture G4b ("Touch") is also a gesture of touching an object.

In Fig. 12, a hand region A17 is shown. The hand of the user appearing in the hand region A17 is changing from a shape where the palm of the hand is open to a shape where the palm is closed. From such movement of the user's hand, the image recognition unit 152 can recognize a gesture G5. The gesture G5 ("Grasp") is also a gesture of grasping an object.

Note that the gestures described here are mere examples. It is not necessary for the image recognition unit 152 to recognize a number of such gestures and/or the image recognition unit 152 may additionally recognize other types of gestures.

### (5) Voice Recognition Unit

The voice recognition unit 154 carries out voice recognition on the voice of the user based on an input voice inputted from the voice acquisition unit 130. If, for example, an application being carried out or a UI receives the inputting of a voice command, the voice recognition unit 154 recognizes a voice command from the user's voice and outputs an identifier of the recognized voice command to the application unit 140 or the control unit 170.

### (6) Characteristics DB

The characteristics DB 160 stores in advance image characteristics data which is to be used in image recognition by the image recognition unit 152. As one example, the image characteristics data may include known image characteristic values for an operation object (such as the hand) used by the user and the face of the user. The image characteristics data may also include facial image data for each user. The image characteristics data may also include gesture definition data defining gestures to be recognized by the image recognition unit 152. The characteristics DB 160 may also store in advance voice characteristics data to be used for voice recognition by the voice recognition unit 154.

### (7) Operation Control Unit

The operation control unit 172 generates a UI image by superimposing at least one UI object on the input image, and displays a generated UI image (an output image corresponding to the input image) on the screen of the display 108. The input image for generating the UI image may differ to the input image to be used by the image recognition unit 152 for recognizing the operation object (as one example, an image with reduced resolution may be used to recognize the operation object). The operation control unit 172 then controls the displaying and operation of at least one UI object based on the recognition result of the operation object inputted from the image recognition unit 152.

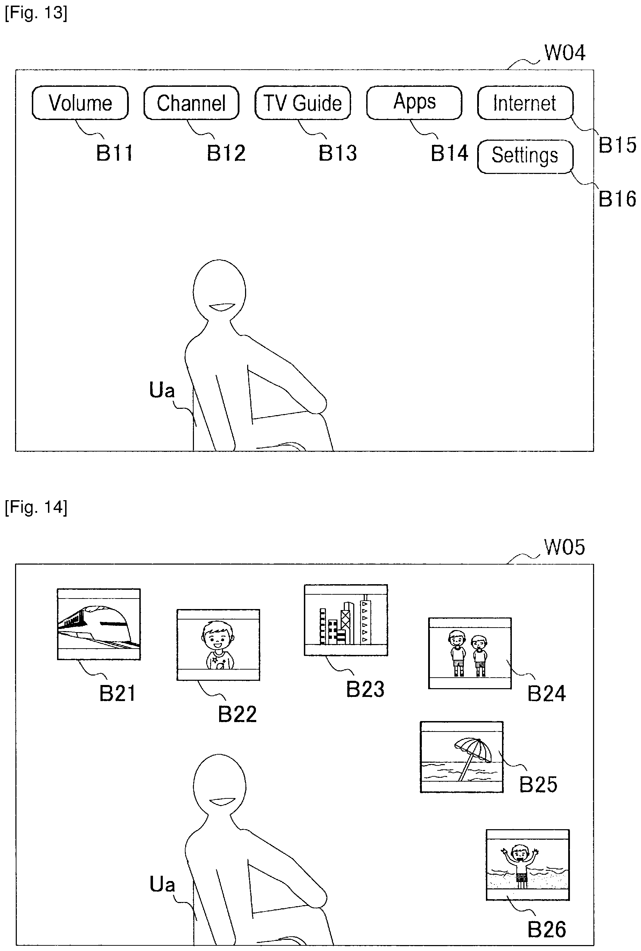

Fig. 13 is a diagram useful in explaining a first example of UI objects. In the first example, the UI objects are menu items of an application menu. As shown in Fig. 13, a UI image W04 includes UI objects B11 to B16. The UI object B11 is a menu item (Volume) for setting the volume when reproducing a television program. The UI object B12 is a menu item (Channel) for setting the channel to be reproduced. The UI object B13 is a menu item (TV Guide) for launching an electronic program guide display function. The UI object B14 is a menu item (Apps) for launching other application functions. The UI object B15 is a menu item (Internet) for launching an Internet browsing function. The UI object B16 is a menu item (Settings) for launching an appliance setting function of the information processing apparatus 100. Such menu items may be defined in a hierarchy, and as one example subitems "Increase volume" and "Decrease volume" may be present below a UI object B11 that is the menu item for setting volume. If individual users are identified using input images, a set of UI objects that are personalized for individual users may be displayed.

Fig. 14 is a diagram useful in explaining a second example of UI objects. In this second example, the UI objects are content items. As shown in Fig. 14, a UI image W05 includes UI objects B21 to B26. The UI objects B21 to B26 respectively express thumbnails of photographic content. Note that instead of photographic content, the UI objects may be other types of content items, such as video content, music content, or text content.

As shown in Figs. 13 and 14, in a state where an operation object has not been recognized, the operation control unit 172 lays out the UI objects at default display positions. The default display positions may be positions provided so as to be fixed or may be positions that move (as one example, that move so as to float) in accordance with some type of algorithm. The operation control unit 172 then causes the display positions of at least one UI object displayed before recognition of the operation object to approach toward the user after recognition of the operation object. The operation control unit 172 may cause the display position of a UI object to approach toward the recognized operation object or to approach toward part of the body of a different user to the recognized operation object. Thus, a position of the UI-object is spatially related to the recognized operation object since it is moved toward the recognized operation object, such as the user's hand.

In a certain scenario, the mode of approach of UI objects toward the user is uniform. That is, the operation control unit 172 sets the approach speeds of the UI objects that are to make the approach at the same value so that such UI objects all approach toward the user at the same approach speed.

In another scenario, the mode of approach of UI objects toward the user is non-uniform. That is, the operation control unit 172 sets the approach speeds of the UI objects that are to make the approach at different values so that the UI objects approach toward the user at different approach speeds. In addition to (or instead of) the approach speed, other attributes of the UI objects may be set non-uniformly. As examples, such other attributes may include at least one of approach start timing, post-approach display positions (hereinafter referred to as the "target positions"), display size, transparency, and depth.

As one example, when causing the display positions of the UI objects to approach toward the user, the operation control unit 172 may vary the mode of approach of the respective objects in accordance with priorities set for the respective objects. Such priorities are set in advance by the priority setting unit 174 in accordance with a specific priority setting standard and stored by an operation DB 180. A first example of the priority setting standard is a standard relating to an operation history of the UI objects. As one example, the priorities may be set higher for UI objects with a higher operation frequency (the number of past operations per specific period) and the priorities may be set lower for UI objects with a lower operation frequency. It is also possible to set the priority higher for UI objects that were operated at more recent timing in the past. A second example of a priority setting standard is a standard relating to user attributes. As one example, out of a plurality of content items, the priorities of UI objects corresponding to content items with a high recommendation score calculated according to a known recommendation technology based on the user attributes may be set at higher values. The operation control unit 172 may provide the user with a UI for switching the priority setting standard at desired timing between a plurality of candidates. Such UI may be realized by any method such as user gestures or voice commands.

Typically, the operation control unit 172 sets the approach speed and other attributes of the UI objects so as to make objects that have higher priorities easier to operate for the user. More specifically, as one example, the operation control unit 172 may set the approach speed toward the user higher for objects with higher priorities. The operation control unit 172 may also set the approach start timing of objects earlier for objects with higher priorities. Also, for an object with higher priority, the operation control unit 172 may set the target position closer to the user, the display size larger, the transparency lower, or the depth shallower.

Regardless of whether the mode of approach toward the user of the UI objects is uniform or non-uniform, the operation control unit 172 controls operations of UI objects by the user in response to a number of operation events defined in advance. The operation events typically include recognition of a user gesture, and recognition of voice commands may be used to complement such recognition. At least one operation event is recognition of a new operation object. Recognition of a new operation object may trigger UI objects approaching toward the user. Another operation event may trigger execution (launching) of a process associated with a UI object. A number of specific examples of operation events that can be used in the present embodiment are described later in this specification.

The operation control unit 172 also controls the displaying of a UI image via the display 108. As one example, the operation control unit 172 may display only an UI image on which UI objects are superimposed on the screen of the display 108. Alternatively, the operation control unit 172 may display a single output image generated by combining a UI image and an application image generated by the application unit 140 on the screen. A number of examples of window compositions of output images that can be used in the present embodiment are described later.

### (8) Priority Setting Unit

The priority setting unit 174 sets the priority of each UI object in accordance with the priority setting standard described earlier. As one example, in accordance with a priority setting standard relating to the operation histories of UI objects, the priority setting unit 174 may set the priorities higher for UI objects with a higher operation frequency. Also, in accordance with a priority setting standard relating to user attributes, the priority setting unit 174 may set the priorities higher for UI objects corresponding to content items with a higher recommendation score. The priority setting unit 174 may also set the priorities of UI objects randomly to add an element of surprise to the UI. The priority setting unit 174 may update the priority data for example when a UI object has been operated or when the user attributes have changed.

### (9) Operation DB

The operation DB 180 stores data used by the operation control unit 172 to control displaying and operations of UI objects. The data stored by the operation DB 180 includes object data showing a default display position and default values of other attributes for each UI object. The data stored by the operation DB 180 may also include priority data showing priorities set by the priority setting unit 174, operation history data showing an operation history for each user, and user data showing attributes (such as age, sex, occupation, and tastes) for each user.

### <2-3. Mode Of Approach of UI Objects>

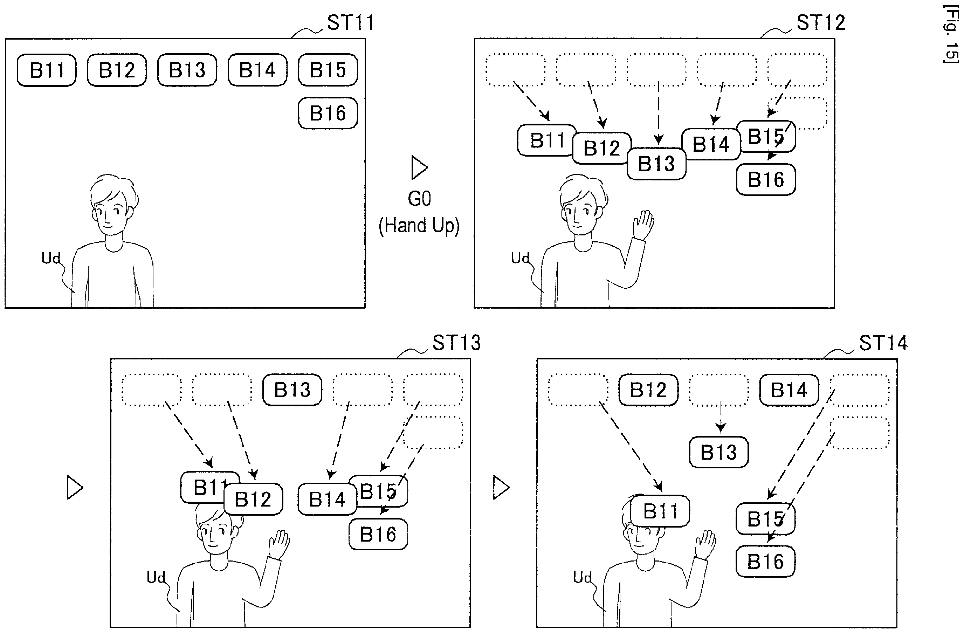

This section will describe a number of examples of modes of approach toward the user of UI objects with reference to Figs. 15 to 21.

### (1) First Example

Fig. 15 is a diagram useful in explaining a first example of a mode of approach toward the user of UI objects. In this first example, the mode of approach of the UI objects is uniform. After sufficiently approaching the user, the respective UI objects move away from the vicinity of the user without remaining at such target positions.

In Fig. 15, four UI images ST11 to ST14 are shown along a time axis.

A user Ud appears in the UI image ST11 and a mirror image display is realized. UI objects B11 to B16 are laid out at default display positions. It is assumed here that as a result of the user Ud raising his hand, the image recognition unit 152 recognizes the gesture G0.

In the next UI image ST12, the user Ud is raising his hand. In response to the recognition of the gesture G0, the operation control unit 172 causes the UI objects B11 to B16 to start approaching toward the user Ud (as one example, the hand that is the operation object of the user Ud). In the UI image ST12, the UI object B13 is positioned closest to the user Ud.

In the next UI image ST13, the UI object B13 returns to the default display position and in place of the UI object B13, the UI objects B12 and B14 are positioned in the vicinity of the user Ud's hand. In the next UI image ST14, the UI objects B12 and B14 return to the default display positions and in place of the UI objects B12 and B14, the UI objects B11, B15 and B16 are positioned in the vicinity of the user Ud's hand.

According to this mode of approach, it is possible for the user to touch the UI object B13 at the time of the UI image ST12, to touch any of the UI objects B12 and B14 at the time of the UI image ST13, and to touch any of the UI objects B11, B15, and B16 at the time of the UI image ST14 with a simple operation of merely moving his hand or arm. At such time, since the screen region in the vicinity of the user is not crowded by a large number of UI objects, the risk of an erroneous operation being carried out, such as touching the wrong UI object, is reduced.

### (2) Second Example

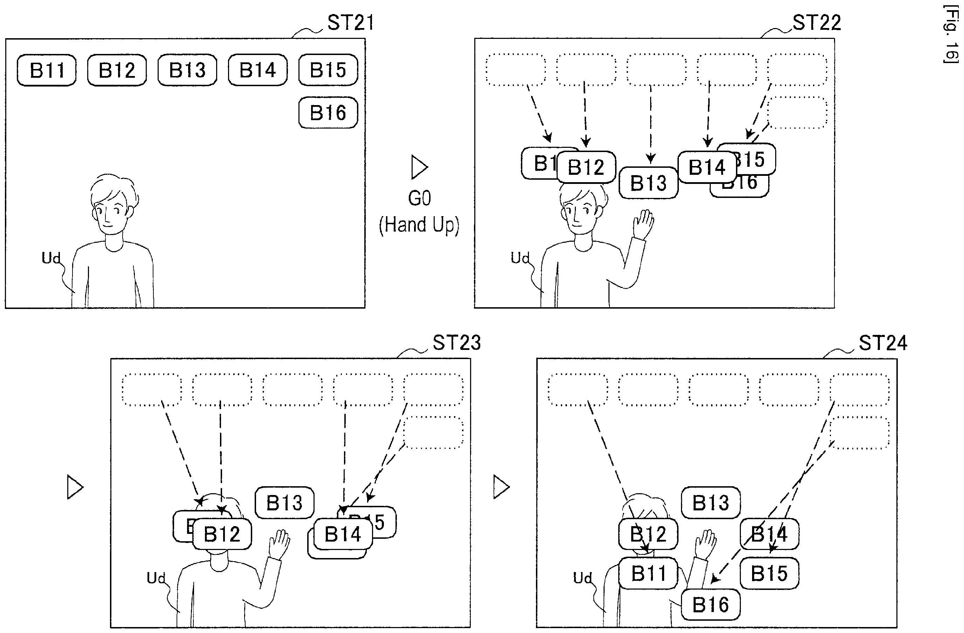

Fig. 16 is a diagram useful in explaining a second example of a mode of approach toward the user of UI objects. In this second example, the mode of approach of the UI objects is non-uniform. After sufficiently approaching the user, the respective UI objects remain at their target positions.

In Fig. 16, four UI images ST21 to ST24 are shown along a time axis.

The user Ud appears in the UI image ST21 and a mirror image display is realized. UI objects B11 to B16 are laid out at default display positions. It is assumed here that as a result of the user Ud raising his hand, the image recognition unit 152 recognizes the gesture G0.

In the next UI image ST22, the user Ud is raising his hand. In response to the recognition of the gesture G0, the operation control unit 172 causes the UI objects B11 to B16 to start approaching toward the user Ud. In the UI image ST22, the UI object B13 is positioned closest to the user Ud.

In the next UI image ST23, the UI object B13 remains at its target position and the UI objects B12 and B14 also reach the vicinity of the user Ud's hand. In the next UI image ST24, the UI objects B12, B13, and B14 remain at their target positions and the UI objects B11, B15 and B16 also reach the vicinity of the user Ud's hand.

According to this mode of approach, it is possible for the user to touch the UI object B13 at the time of the UI image ST22, to touch any of the UI objects B12, B13, and B14 at the time of the UI image ST23, and to touch any of the UI objects B11 to B16 at the time of the UI image ST24 with a simple operation of merely moving his hand or arm. In particular, at the time of the UI images ST22 and ST23, crowding of the screen region in the vicinity of the user by a large number of UI objects is avoided. Also, as described later, if an operation event of moving the display position of a designated UI object away from the user is used, it is possible to ease the crowding of the screen region in the vicinity of the user from a state where the UI objects B11 to B16 have reached the vicinity of the user.

### (3) Third Example

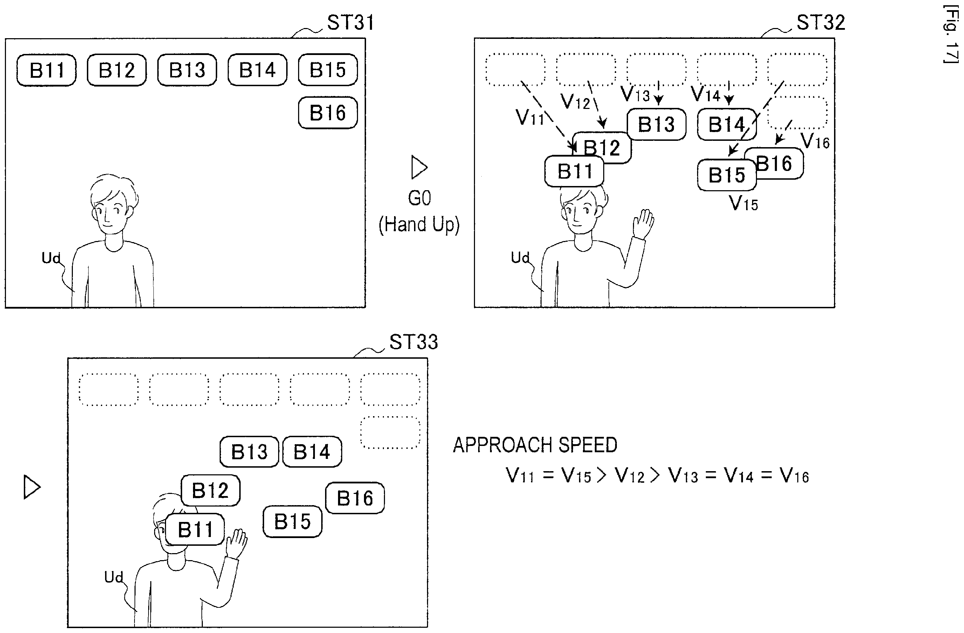

Fig. 17 is a diagram useful in explaining a third example of a mode of approach toward the user of UI objects. In this third example, the mode of approach of the UI objects is non-uniform and the operation control unit 172 sets the approach speeds of the UI objects that are to make an approach at different values.

In Fig. 17, three UI images ST31 to ST33 are shown along a time axis.

The user Ud appears in the UI image ST31 and a mirror image display is realized. The UI objects B11 to B16 are laid out at default display positions. It is assumed here that as a result of the user Ud raising his hand, the image recognition unit 152 recognizes the gesture G0.

In the next UI image ST32, the user Ud is raising his hand. In response to the recognition of the gesture G0, the operation control unit 172 sets the respective approach speeds V₁₁ to V₁₆ of the UI objects B11 to B16 in accordance with the priorities set by the priority setting unit 174. In the example in Fig. 17, it is assumed that priorities that were set by the priority setting unit 174 in accordance with a priority setting standard relating to the operation histories of the respective UI objects are used by the operation control unit 172.

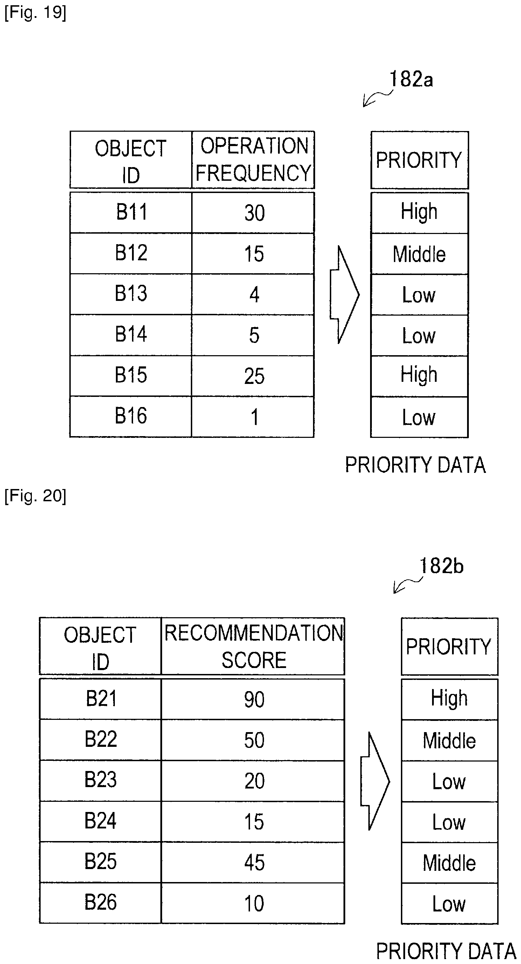

Fig. 19 is a diagram useful in explaining an example of priority data corresponding to the third example in Fig. 17. As shown in Fig. 19, priority data 182a includes three data items, namely "object ID", "operation frequency", and "priority". The "object ID" is an identifier for uniquely identifying each UI object. The "operation frequency" shows the number of past operations per specific period (for example, one week, one day, or a few hours) of each UI object. The "priority" shows a priority set for each UI object. Here, as one example, the priority is set at one of three levels, namely "High", "Middle" and "Low". In the example in Fig. 19, the operation frequencies of the UI objects B11 and B15 are the first and second highest, and accordingly the priorities of the UI objects B11 and B15 are set at High. The operation frequency of the UI object B12 is the third highest, and accordingly the priority of the UI object B12 is set at Middle. The priorities of the remaining UI objects B13, B14, and B16 are set at Low.

The operation control unit 172 refers to such priority data 182a and sets the approach speeds V₁₁ and V₁₅ of the UI objects B11 and B15 at the fastest speed, the approach speed V₁₂ of the UI object B12 at next fastest speed, and the approach speeds V₁₃, V₁₄, and V₁₆ of the UI objects B13, B14, and B16 at the slowest speed. As shown in Fig. 17, in the UI image ST33, the UI objects B11 and B15 reach the vicinity of the user Ud's hand the earliest.

According to this mode of approach, it is possible for the user to rapidly operate the UI objects that are operated most frequently. Also, since the screen region in the vicinity of the user does not become crowded with a large number of UI objects, the risk of an erroneous operation being carried out, such as touching the wrong UI object, is reduced.

### (4) Fourth Example

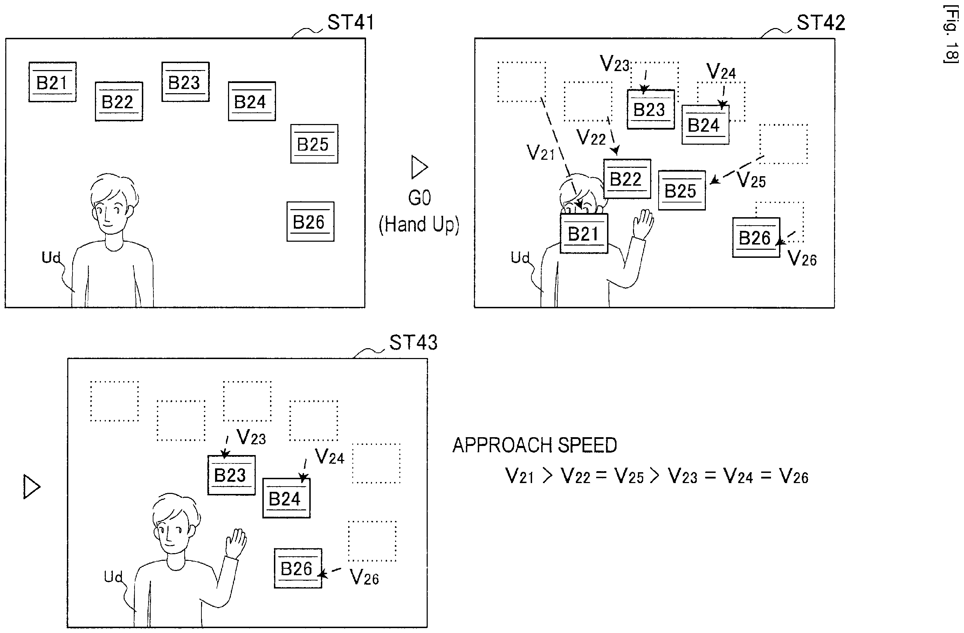

Fig. 18 is a diagram useful in explaining a fourth example of a mode of approach toward the user of UI objects. In this fourth example, the mode of approach of the UI objects is non-uniform and the operation control unit 172 sets the approach speeds of the UI objects that are to make an approach at different values.

In Fig. 18, three UI images ST41 to ST43 are shown along a time axis.

The user Ud appears in the UI image ST41 and a mirror image display is realized. The UI objects B21 to B26 are laid out at default display positions. It is assumed here that as a result of the user Ud raising his hand, the image recognition unit 152 recognizes the gesture G0.

In the next UI image ST42, the user Ud is raising his hand. In response to the recognition of the gesture G0, the operation control unit 172 sets the respective approach speeds V₂₁ to V₂₆ of the UI objects B21 to B26 in accordance with the priorities set by the priority setting unit 174. In the example in Fig. 18, it is assumed that priorities that were set by the priority setting unit 174 in accordance with a priority setting standard relating to user attributes are used by the operation control unit 172.

Fig. 20 is a diagram useful in explaining an example of priority data corresponding to the fourth example in Fig. 18. As shown in Fig. 20, priority data 182b includes three data items, namely "object ID", "recommendation score", and "priority". The "object ID" is an identifier for uniquely identifying each UI object. The "recommendation score" shows a recommendation score calculated (by an arbitrary known recommendation algorithm) based on attributes of the user and information relating to content. The "priority" shows a priority set for each UI object. Here, as one example, it is assumed that the priority is set at one of three levels, namely "High", "Middle" and "Low". In the example in Fig. 20, the recommendation score of the UI object B21 is the highest, and accordingly the priority of the UI object B21 is set at High. The recommendation scores of the UI objects B22 and B25 are the second and third highest, and accordingly the priorities of the UI objects B22 and B25 are set at Middle. The priorities of the remaining UI objects B23, B24, and B26 are set at Low.

The operation control unit 172 refers to such priority data 182b and sets the approach speed V₂₁ of the UI object B21 at the fastest speed, the approach speeds V₂₂ and V₂₅ of the UI objects B22 and B25 at the next fastest speed, and the approach speeds V₂₃, V₂₄, and V₂₆ of the UI objects B23, B24 and B26 at the slowest speed. Returning to Fig. 18, in the UI image ST42, the UI object B21 has reached the vicinity of the user Ud's hand the earliest. However, if the UI object B21 (and the following UI objects B22, B25) is not operated by the user Ud, in the next UI image ST43, the UI objects B23, B24, and B26 that have a slow approach speed may reach the vicinity of the user Ud.

According to this mode of approach, it is possible for the user to rapidly operate a UI object determined by a recommendation algorithm to be more suited to such user. Also, since the screen region in the vicinity of the user is not crowded by a large number of UI objects, the risk of an erroneous operation being carried out, such as touching the wrong UI object, is reduced.

### (5) Fifth Example

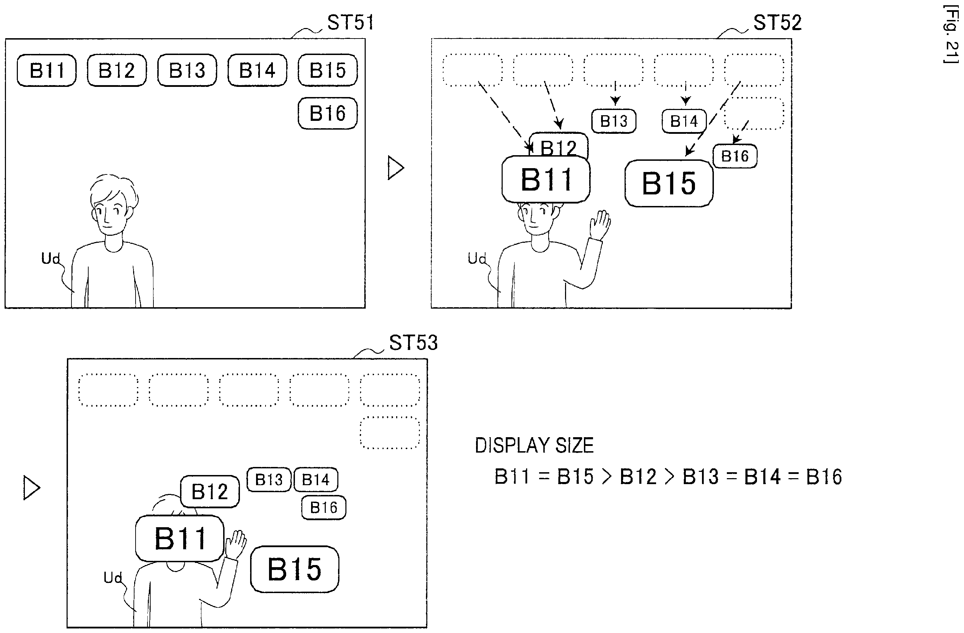

Fig. 21 is a diagram useful in explaining a fifth example of a mode of approach toward the user of UI objects. In this fifth example, the mode of approach of the UI objects is non-uniform and the operation control unit 172 sets the approach speeds of the UI objects that are to make an approach at different values. The operation control unit 172 also sets the display sizes of the UI objects to make an approach at different values.

In Fig. 21, three UI images ST51 to ST53 are shown along a time axis.

The user Ud appears in the UI image ST51 and a mirror image display is realized. The UI objects B11 to B16 are laid out at default display positions. It is assumed here that as a result of the user Ud raising his hand, the image recognition unit 152 recognizes the gesture G0.

In the next UI image ST52, the user Ud is raising his hand. In response to the recognition of the gesture G0, the operation control unit 172 sets the respective approach speeds and display sizes of the UI objects B21 to B26 in accordance with the priorities set by the priority setting unit 174. In the example in Fig. 21, it is assumed that the priority data 182a illustrated in Fig. 19 is used.

The operation control unit 172 refers to such priority data 182a and sets the approach speeds V₁₁ and V₁₅ of the UI objects B11 and B15 at the fastest speed, the approach speed V₁₂ of the UI object B12 at the next fastest speed, and the approach speeds V₁₃, V₁₄, and V₁₆ of the UI objects B13, B14 and B16 at the slowest speed. The operation control unit 172 also sets the display size of the UI objects B11 and B15 the largest, the display size of the UI object B12 the next largest, and the display sizes of the UI objects B13, B14 and B16 the smallest.

In the next UI image ST53, most of the UI objects have already reached the vicinity of the user Ud's hand and out of such UI objects, the UI objects B11 and B15 have larger display sizes that the other UI objects.

According to this mode of approach, it is possible for the user to operate a UI object that has a higher priority more rapidly and more accurately.

### <2-4. Various Examples of Operation Events>

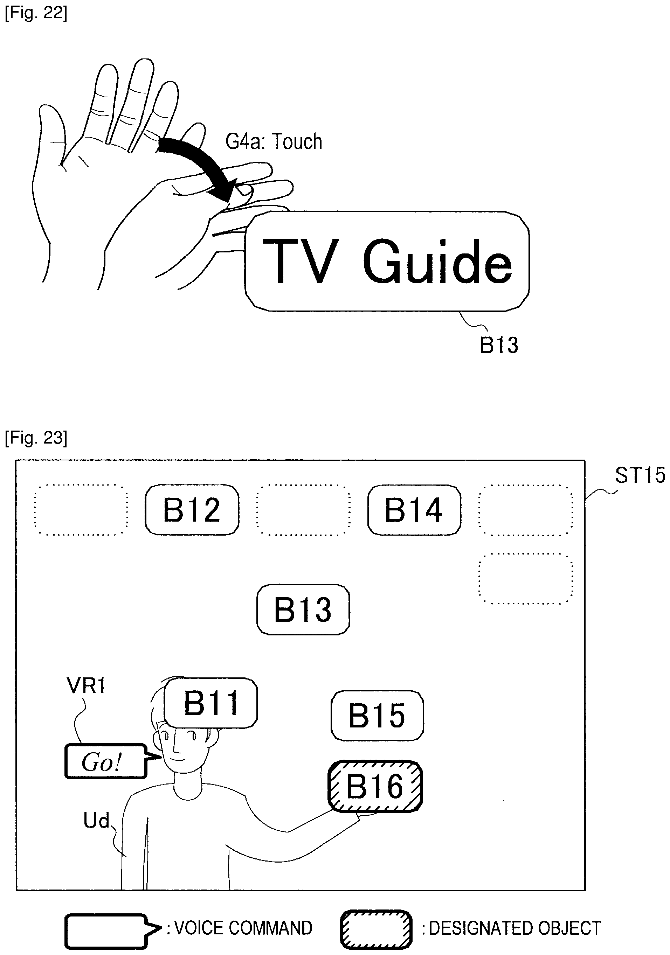

In this section, a number of examples of operation events relating to control by the operation control unit 172 will be described with reference to Figs. 22 to 28.

### (1) First Example

Fig. 22 is a diagram useful in explaining a first example of an operation event. In Fig. 22, the user's hand that is the operation object and a UI object B13 are shown. From a movement of the user's hand that bends the wrist, the image recognition unit 152 can recognize the gesture G4b of touching an UI object. By comparing a position in the UI image of the hand region at such time and the display position of the respective UI objects, the operation control unit 172 can determine that the UI object B13 has been designated (that is, touched). If the position of the hand region coincides with the display position of the same UI object for a specified length of time, the operation control unit 172 may also determine that such UI object is designated. In response to such an operation event, the operation control unit 172 causes the application unit 140 to carry out a process associated with the designated UI object B13. In the example in Fig. 22, since the UI object B13 is a menu item for launching an electronic program guide display function, an electronic program guide can be then displayed on the screen by the application unit 140.

As a result of using such an operation event, the user is capable of remotely controlling the information processing apparatus 100 even when a remote controller is not at hand. At this time, since the only movement necessary by the user is a simple gesture, the user is capable of having the information processing apparatus 100 carry out a desired process (for example, a menu process or an application process) without feeling stress.

Note that the process associated with a UI object may be a process for UI control. For example, opening a submenu item from the designated menu item, calling a setting screen corresponding to the designated menu item, and the like may be carried out in response to recognition of a gesture of touching a UI object.

### (2) Second Example

Fig. 23 is a diagram useful in explaining a second example of an operation event. As shown in Fig. 23, in a UI image ST15 that follows the UI image ST14 shown in Fig. 15, the user Ud's left hand that is the operation object coincides with the UI object B16. When this happens, the operation control unit 172 determines that the UI object B16 has been designated by the user Ud. In addition, it is assumed that a specific voice command VR1 issued by the user has been recognized by the voice recognition unit 154. In the example in Fig. 23, the voice command VR1 corresponds to a voice input of "Go!". The operation control unit 172 causes the application unit 140 to carry out a process associated with the designated UI object B16 in response to an operation event corresponding to recognition of the voice command VR1 by the voice recognition unit 154.

In the UI image ST15, the operation control unit 172 sets display attributes (for example, at least one of texture, color, transparency, display size, and depth) of the designated UI object B16 at different attribute values to other UI objects. By doing so, it is possible for the user to grasp that the UI object B16 was appropriately designated.

Even when such an operation event is used, it is possible for the user to remotely control the information processing apparatus 100 even when a remote controller is not at hand. At this time, since the only movement necessary for the user is a simple gesture, it is possible to reduce the user's stress. Note that for the other examples of operation events described in this section, recognition of the user's gesture may be substituted with recognition of a voice command.

### (3) Third and Fourth Examples

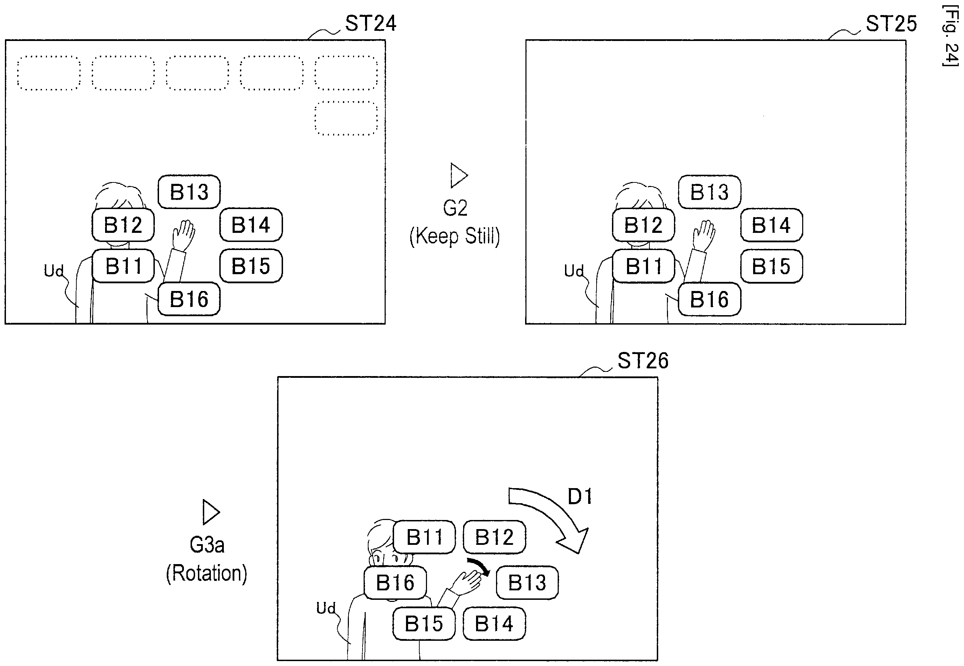

Fig. 24 is a diagram useful in explaining a third example and a fourth example of operation events. In Fig. 24, the UI image ST24 shown in Fig. 16 and following UI images S25 and ST26 are also shown. In the UI image ST24, the UI objects B11 to B16 have display positions laid out in a ring in the vicinity of the user Ud's hand that is the operation object. After this, the image recognition unit 152 may recognize the gesture G2 of keeping the hand still from movement of the user's hand where the hand remains substantially still in the input image for a specific length of time. The operation control unit 172 stops the movement on the screen of the UI objects B11 to B16 in response to an operation event corresponding to recognition of the gesture G2. In the next UI image ST25 also, the display positions of the UI objects B11 to B16 are not updated.

In the next UI image ST26, the image recognition unit 152 may recognize the gesture G3a of rotating the hand from a movement where the user Ud's hand, which is operation object, rotates. In response to such operation event, the operation control unit 172 rotates (in the direction D1 in the image) the display positions of the UI objects B11 to B16 around a reference point in the image. As examples, the reference point referred to here may be a center of gravity of the hand region, a center of the UI objects B11 to B16, or any other arbitrary point.

As a result of using an operation event of stopping the movement of the UI objects described earlier, it is possible for the user to stop further movement of the objects when a desired UI object has reached a display position that is suited to operation and to then accurately operate a desired UI object.

Also, as a result of using an operation event of rotating the display positions of the UI objects described earlier, it is possible for the user to move the display positions of UI objects that have approached the vicinity of the user to positions that is easier to handle. Instead of rotating the display positions of the UI objects in response to recognition of the gesture of rotating the hand, the display positions of the UI objects may move in parallel in response to movement of the user's hand. Note that instead of all of the displayed UI objects rotating or moving as shown in the example in Fig. 24, only some of the UI objects may be rotated or moved. As one example, at least one UI object to be rotated or moved may be designated by a gesture of the user tracing the UI objects with his/her hand.

### (4) Fifth Example

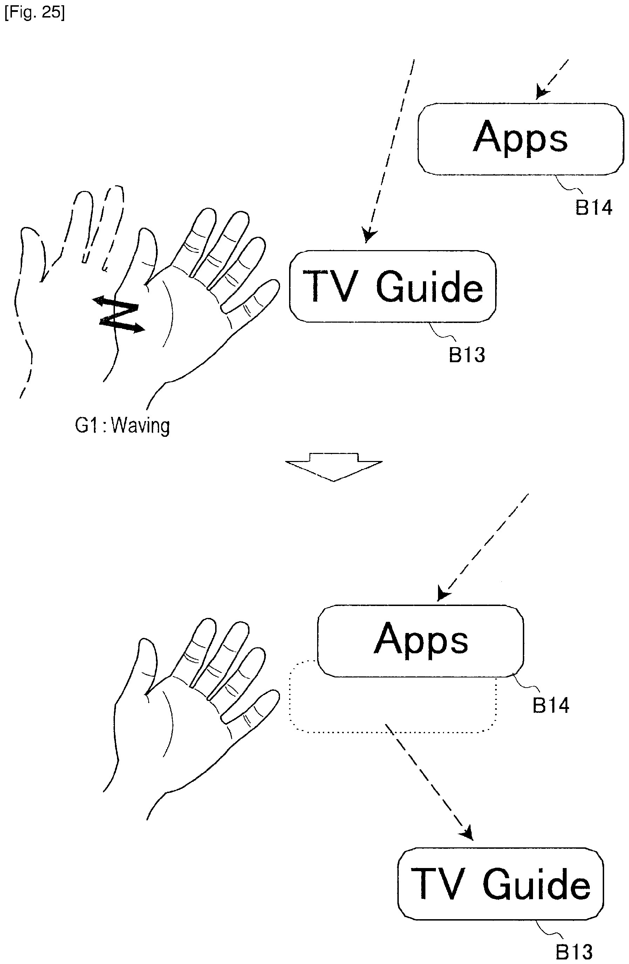

Fig. 25 is a diagram useful in explaining a fifth example of an operation event. In the upper half of Fig. 25, the user's hand that is the operation object is shown together with the UI objects B13 and B14. The image recognition unit 152 may recognize the gesture G1 of waving the hand from a movement where the user's hand is waved to the left and right. By comparing the position in the UI image of the hand region at such time and the display positions of the respective UI objects, the operation control unit 172 can determine that the UI object B13 has been designated. In response to such operation event, the operation control unit 172 moves the display position of the designated UI object B13 away from the user. In the lower half of Fig. 25, the display position of the UI object B13 is moved away from the user and in place of the UI object B13 the UI object B14 approaches the user's hand.

As a result of using such an operation event, even if a UI object that is not necessary has approached the user earlier than a desired UI object, it is still possible for the user to remove the UI object that is not necessary from the screen region in the vicinity of the user and thereby prevent crowding of such screen region.

### (5) Sixth Example

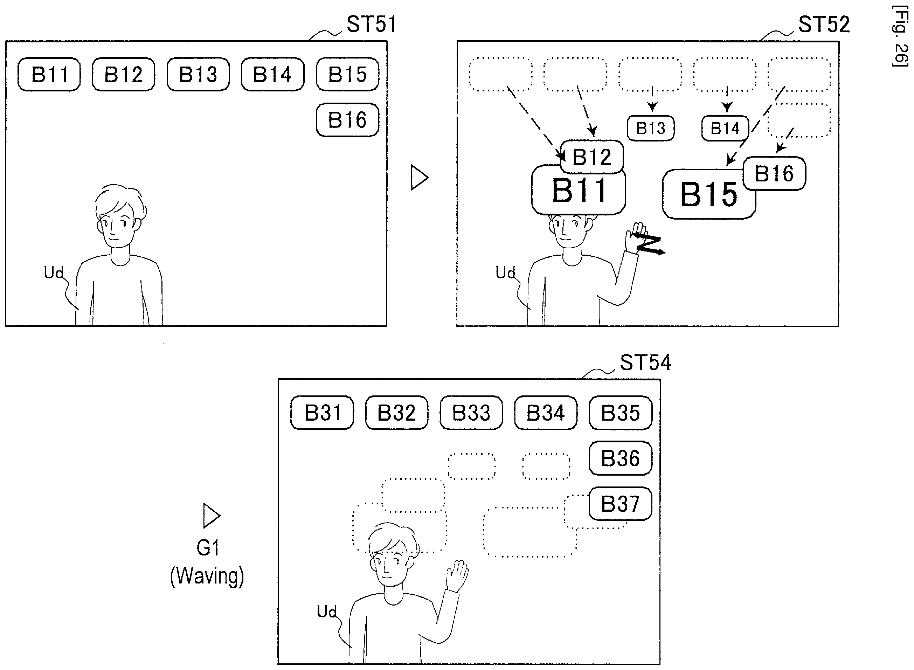

Fig. 26 is a diagram useful in explaining a sixth example of an operation event. In Fig. 26, the UI images ST51 and ST52 shown in Fig. 21 and a following UI image ST54 are shown along a time axis.

The user Ud appears in the UI image ST51 and a mirror image display is realized. The UI objects B11 to B16 are also laid out at default display positions. The UI objects B11 to B16 are objects belonging to a first category out of a plurality of categories defined in advance. As one example, the first category is a category relating to a television program reproduction function. Note that in an initial state, UI objects are not necessarily visible to the user. For example, in an initial state, UI objects may be positioned outside the screen, or may be transparent or translucent. The UI objects may change from a non-active state (undisplayed or translucent) to an active state (displayed or non-transparent) at timing where the user raises his/her hand.

In a UI image ST52, as a result of the user Ud raising his hand, the UI objects B11 to B16 start to approach the user Ud. In the UI image ST52, the image recognition unit 152 may recognize the gesture G1 of waving the hand from a movement where the user's hand is waved to the left and right. In response to an operation event that corresponds to recognition of the gesture G1, the operation control unit 172 replaces the objects B11 to B 16 laid out in the UI image with the UI objects belonging to a second category. The second category may be an arbitrary category (such as a category relating to a content reproduction function) that differs to the first category.

In the UI image ST54, the objects B11 to B16 are removed from the screen and new UI objects B31 to B37 are laid out on the screen.

As a result of using such operation event, the information processing apparatus 100 is capable of displaying only some of the UI objects on the screen without displaying all of the UI object candidates that can be displayed on the screen. Accordingly, crowding of the screen region is significantly eased. It is also possible for the user to have a desired UI object, which is not presently displayed at such time, displayed on the screen via a simple gesture and to appropriately operate such UI object.

Note that selection of the category of UI objects to be displayed in an UI image may depend on the shape of the user's hand. For example, the UI objects that have been displayed so far may be replaced with UI objects that belong to any of the first to fifth categories in response to recognition of five types of hand shape that respectively express the numbers one to five.

Also, the gesture G1 may be defined as not as a gesture for switching the category of UI objects to be displayed but as a gesture for switching the priority setting standard used to set the approach speeds. In this case, in response to the operation event corresponding to the recognition of the gesture G1, the operation control unit 172 resets the priorities of at least one of the UI objects being displayed in accordance with the new priority setting standard.

### (6) Seventh and Eighth Examples

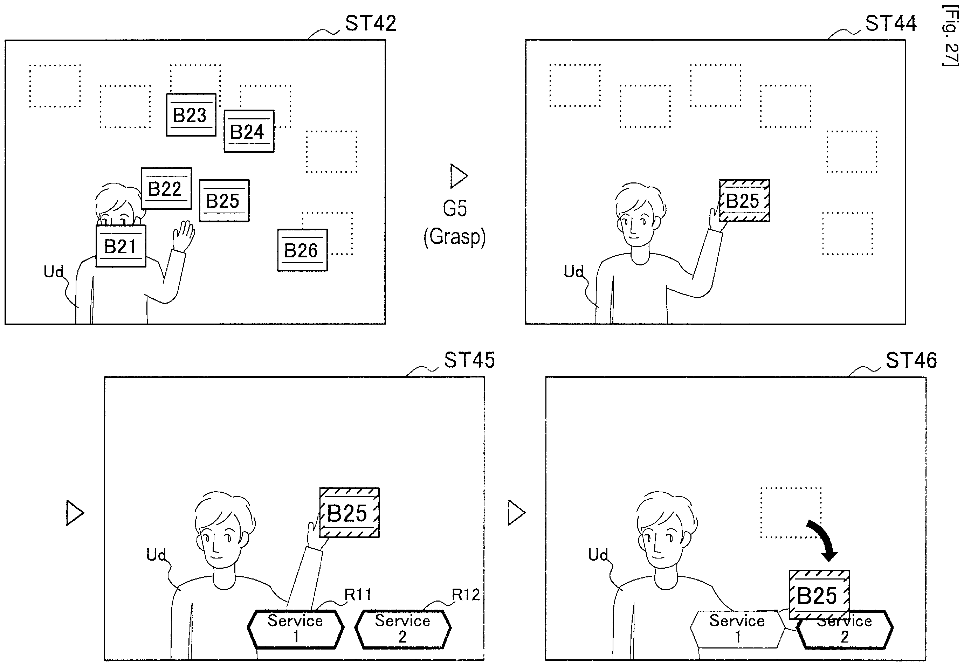

Fig. 27 is a diagram useful in explaining a seventh example and an eighth example of operation events. In Fig. 27, the UI image ST42 shown in Fig. 18 and following UI images ST44, ST45, and ST46 are shown along a time axis.

The user Ud appears in the UI image ST42 and is raising his hand. The UI objects B21 to B26 are approaching toward the user Ud at approach speeds respectively set by the operation control unit 172.

In the next UI image ST44, the image recognition unit 152 may recognize the gesture G5 of grasping an object from a movement of the user's hand that changes from a shape where the palm of the hand is open to a shape where the hand is closed. By comparing the position in the UI image of the hand region at such time with the display positions of the respective UI objects, the operation control unit 172 may determine that the UI object B25 is designated (that is, grasped). In response to an operation event corresponding to the recognition of the gesture G5, the operation control unit 172 thereafter has the display position of the designated UI object B25 track the position of the hand region (that is, has the UI object B25 move together with the operation object).

In the next UI image ST45, UI objects aside from the designated UI object B25 are removed. Also, two screen regions R11 and R12 are set in the image. As one example, in a UI image, the operation control unit 172 may set an equal number of screen regions to the number of processes associated with the designated UI object B25. As one example, if the UI object B25 is a content item for photographic content, the screen region R11 may be associated with launching an image viewer and the screen region R12 may be associated with transmitting a message to which photographic content is appended.

In the next UI image ST46, as a result of the user's hand region moving to a position that coincides with the screen region R12, the display position of the UI object B25 also moves to a position that coincides with the screen region R12. In response to the operation event corresponding to the movement of the UI object B25 to such specific screen region, the operation control unit 172 causes the application unit 140 to carry out a process associated with the UI object B25. Here, as one example, a message transmission function is launched by the application unit 140 and photographic content may be appended to a new message.

As a result of using such operation event, it is possible for the user to launch a desired process for a UI object with an easy and intuitive operation, even when a variety of processes are related to a single UI object.

### (7) Ninth Example

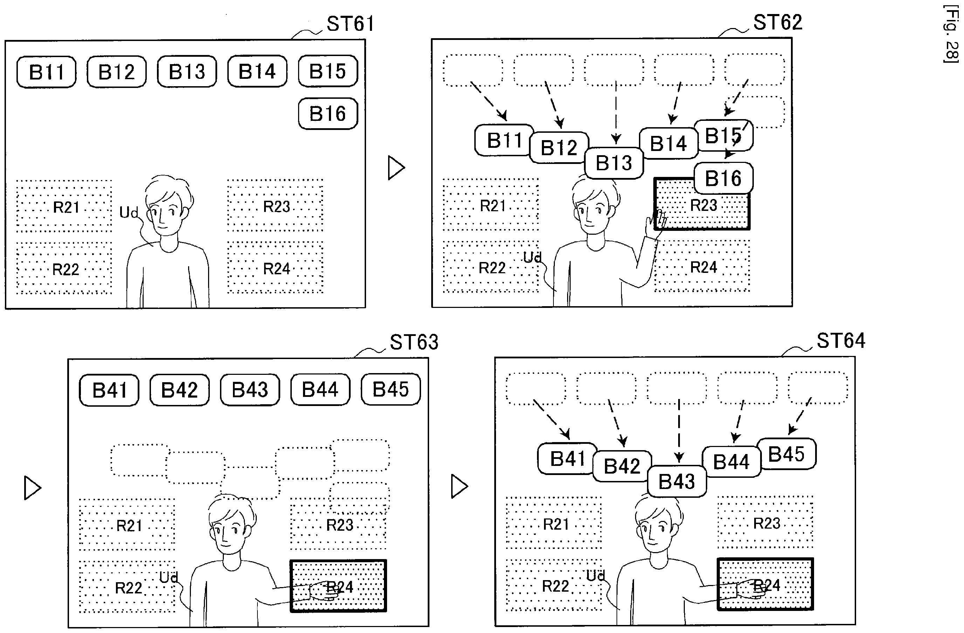

Fig. 28 is a diagram useful in explaining a ninth example of an operation event. In Fig. 28, the four UI images ST61 to ST64 are shown along a time axis.

The user Ud appears in the UI image ST61 and a mirror image display is realized. The UI objects B11 to B16 are also laid out at default display positions. The UI objects B11 to B16 are objects belonging to a first category out of a plurality of categories defined in advance. As one example, the first category is a category relating to a television program reproduction function. In addition, four screen regions R21 to R24 are set in the image. The screen regions R21 to R24 may be associated with respectively different categories.

In the UI image ST62, as a result of the user Ud raising her hand, the UI objects B11 to B16 start to approach toward the user Ud. The position of the user Ud's hand coincides with the screen region R23. It is assumed that the screen region R23 is associated with the first category.

In the UI image ST63, as a result of the position of the hand region being lowered in a downward direction, the position of the user Ud's hand region coincides with the screen region R24. It is assumed that the screen region R24 is associated with a different category to the first category. In response to an operation event corresponding to movement of the hand that is the operation object between screen regions, the objects B11 to B16 laid out in the UI image are replaced with objects belonging to another category.

In the UI image ST63, the objects B11 to B16 are removed from the screen and new UI objects B41 to B45 are laid out in the image. In the next UI image ST64, the UI objects B41 to B45 start to approach toward the user Ud.

In the same way as the sixth example described earlier, as a result of such operation event being used, the information processing apparatus 100 is capable of displaying only some of the UI objects on the screen instead of all of the UI object candidates that can be displayed. Accordingly, crowding of the screen region is significantly eased. It is also possible for the user to have desired UI objects that are not on display at the present time displayed on the screen via a simple operation of simply moving the hand and to appropriately operate such UI objects.

### <2-5 Incorporation of a Plurality of Operation Objects>

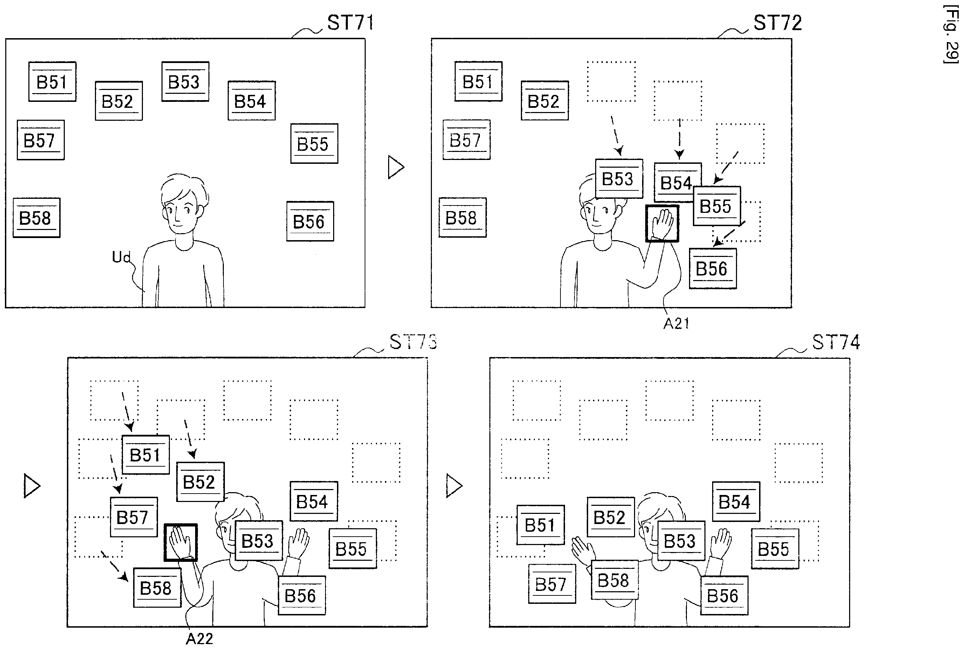

Examples where a single operation object is recognized in the input image have mainly been described so far. However, with the technology according to the present disclosure, a plurality of operation objects may be recognized in the input image. In this section, a number of example operation scenarios involving a plurality of operation objects will be described with reference to Figs. 29 to 31.

### (1) First Example

Fig. 29 is a diagram useful in explaining a first example of an operation scenario involving a plurality of operation objects. In this first example, the left hand and the right hand of a single user are recognized as separate operation objects.

In Fig. 29, four UI images ST71 to ST74 are shown along a time axis.

A user Ud appears in the UI image ST71 and a mirror image display is realized. UI objects B51 to B58 are laid out at default display positions. It is assumed here that the UI objects B51 to B58 are grouped into a plurality of groups in accordance with a grouping standard. As examples, the UI objects may be grouped according to a standard relating to the priorities described earlier, the types of corresponding menu items or content items, or display positions, or may be randomly grouped.

In the next UI image ST72, the user Ud raises his left hand and the hand region A21 is recognized. In response to recognition of the gesture G0 for the hand region A21, the operation control unit 172 causes the UI objects B53 to B56 included in the first group to start approaching toward the user Ud.

In the next UI image ST73, the user Ud further raises his right hand and the hand region A22 is recognized. In response to recognition of the gesture G0 for the hand region A22, the operation control unit 172 causes the UI objects B51, B52, B57, and B58 included in the second group to start approaching toward the user Ud.

In the next UI image ST74, the UI objects B53 to B56 are laid out in a ring in the vicinity of the user Ud's left hand and the UI objects B51, B52, B57, and B58 are laid out in a ring in the vicinity of the user Ud's right hand. As one example, in response to recognition of a gesture of the user Ud bringing his hands together, the operation control unit 172 may form a single ring by merging the two rings of such UI objects. If the hand regions are positioned at edge portions of the screen, the operation control unit 172 may distort the shapes of the rings.

According to this operation scenario, it is possible for the user to have a large number of UI objects approach the vicinity of the user using both hands. A range produced by combining the regions that can be reached by two hands is wider than a region that can be reached by one hand. This means that the user can rapidly designate a desired UI object out of a larger number of UI objects in the vicinity and operate the desired UI object.

### (2) Second Example

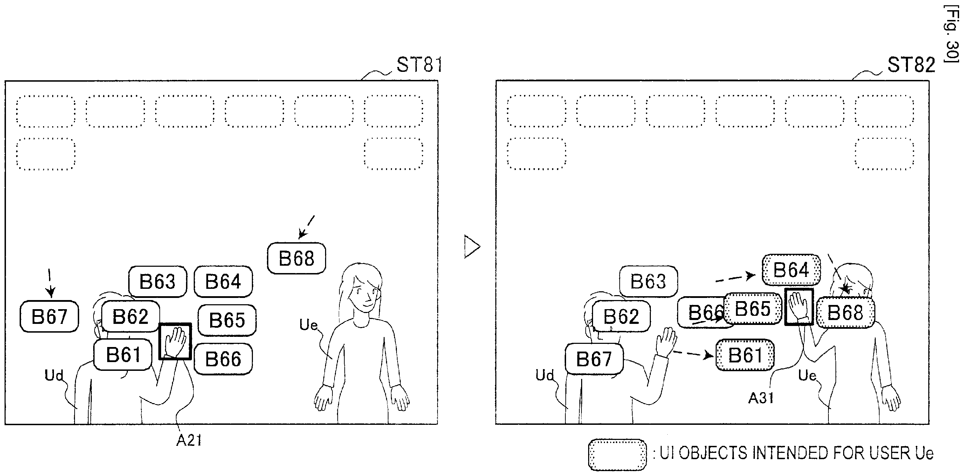

Fig. 30 is a diagram useful in explaining a second example of an operation scenario involving a plurality of operation objects. In this second example, the hands of two users are recognized as separate operation objects.

In Fig. 30, two UI images ST81 to ST82 are shown along a time axis.

The user Ud and a user Ue appear in the UI image ST81 and a mirror image display is realized. UI objects B61 to B68 are also displayed. The user Ud raises his left hand and a hand region A21 is recognized. In response to recognition of the gesture G0 for the hand region A21, the UI objects B61 to B68 are approaching toward the user Ud.

In the next UI image ST82, the user Ue is raising her right hand and a hand region A31 is recognized. In response to recognition of the gesture G0 for the hand region A31, the operation control unit 172 has the UI objects B61, B64, B65 and B68 start to approach toward the user Ue. As one example, the UI objects may be grouped into a plurality of groups in accordance with a grouping standard relating to an operation history for each user or user attributes. In the example in Fig. 30, although the UI objects B62, B63, B66 and B67 are included in a first group intended for the user Ud, the UI objects B61, B64, B65 and B68 are included in a second group intended for the user Ue.

In the UI image ST82, by setting display attributes (for example, color) of the UI objects B61, B64, B65 and B68 at different attribute values to the other UI objects, the operation control unit 172 expresses that the UI objects B61, B64, B65 and B68 are included in the second group intended for the user Ue. If the target positions of the two groups interfere with one another, the operation control unit 172 may shift the target positions to eliminate such interference.

According to this operation scenario, it is possible to share UI objects among a plurality of users. When doing so, it is possible for each user to have suitable UI objects for such user approach the user and to rapidly operate a desired UI object. The fifth example of an operation event described with reference to Fig. 25 may be defined as an operation event of passing a UI object to another user, with it being possible to use such operation in this operation scenario.

### (3) Third Example

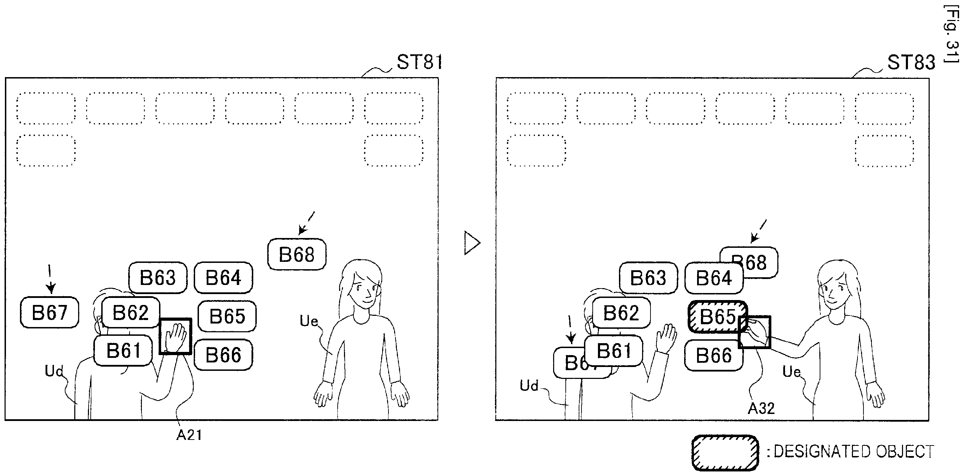

Fig. 31 is a diagram useful in explaining a third example of an operation scenario involving a plurality of operation objects. In this third example also, the hands of two users are recognized as separate operation objects.

In Fig. 31, the UI image ST81 shown in Fig. 30 and a following UI image ST83 are shown along a time axis.

The user Ud and the user Ue appear in the UI image ST81 and a mirror image display is realized. The UI objects B61 to B68 are also displayed. The user Ud raises his left hand and a hand region A21 is recognized. In response to recognition of the gesture G0 for the hand region A21, the UI objects B61 to B68 continue to approach toward the user Ud.

In the next UI image ST83, the user Ue uses her right hand to touch the UI object B65. In response to recognition of the gesture G4a for the hand region A32 of the user Ue's right hand, the operation control unit 172 may determine that the UI object B65 is designated. In response to such operation event, the operation control unit 172 has the application unit 140 carry out a process associated with the designated UI object B65.

According to this operation scenario, it is possible for a different user to easily operate a UI object that has approached toward a given user.

Note that examples where UI objects are two-dimensionally laid out in a UI image have mainly been described so far. However, the respective UI objects are not limited to having two-dimensional display positions and may have an attribute corresponding to depth. If the information processing apparatus 100 is capable of recognizing the distance between a camera and an operation object using a known method such as parallax, the operation control unit 172 may determine which UI object has been designated by the user also based on such recognized distance.

### <2-6. Example Window Compositions>

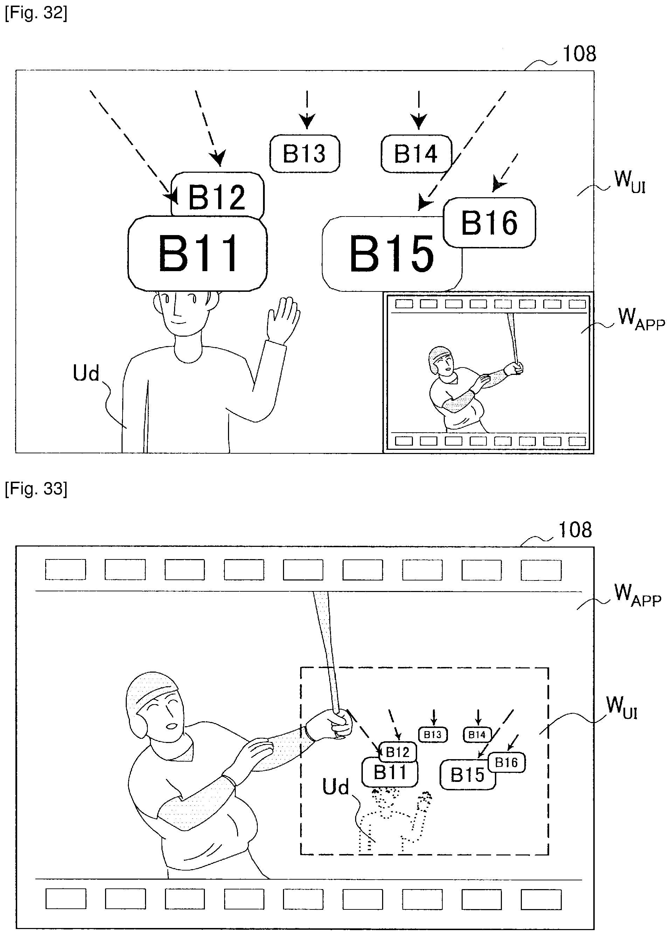

Figs. 32 and 33 show examples of the window composition of output images that may be used by the present embodiment. In such drawings, a UI window W_{UI} and an application window W_{APP} are displayed by the display 108. The UI window W_{UI} displays a UI image generated by the operation control unit 172. The application window W_{APP} displays an application image (for example, a content image) inputted from the application unit 140. In the first example in Fig. 32, the application window W_{APP} is combined at the bottom right corner of the UI window W_{UI}. In the second example in Fig. 33, the UI window W_{UI} is blended with one part of the application window W_{APP}. By using such window composition, as one example it is possible, even when the user does not have a remote controller to hand, for the user to control functions of the information processing apparatus 100 via UI objects while viewing content images.

### <2-7. Example Processing Flow>

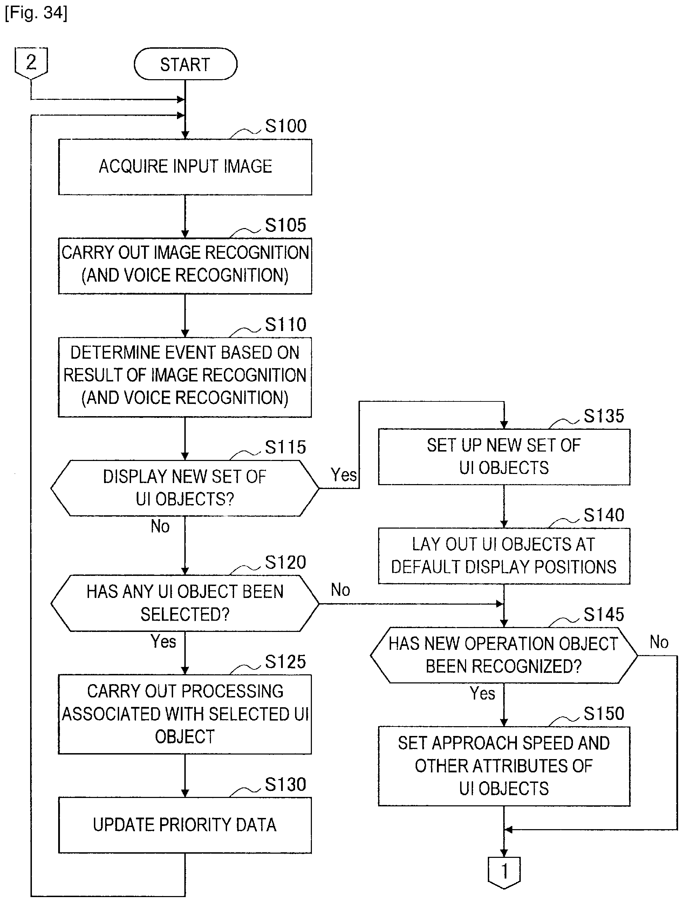

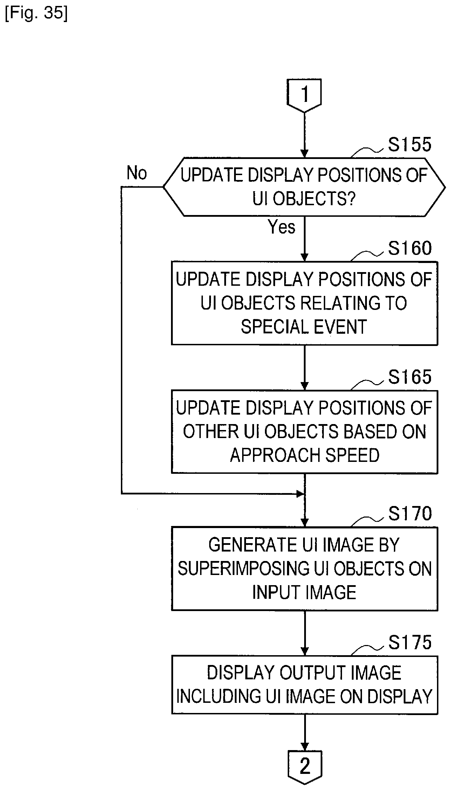

The flowcharts in Figs. 34 and 35 show an example of the flow of processing that may be carried out by the information processing apparatus 100 according to the present embodiment. The processing described here is repeated for each frame in a series of frames that construct video picked up by the camera 101.

As shown in Fig. 34, first the image acquisition unit 120 acquires an image picked up by the camera 101 as an input image (step S100). The image acquisition unit 120 then outputs the acquired input image to the recognition unit 150 and the control unit 170.

Next, the image recognition unit 152 recognizes the operation object appearing in the input image inputted from the image acquisition unit 120 (step S105). It is assumed here that the operation object is the user's hand. For example, the image recognition unit 152 recognizes a hand region in the input image and outputs position data showing the position of such recognized hand region to the control unit 170. The image recognition unit 152 also recognizes a user gesture based on movement of the hand region. In addition, a voice command may also be recognized by the voice recognition unit 154 based on an input voice.

Next, the operation control unit 172 determines an operation event based on an image recognition result inputted from the image recognition unit 152 and a voice recognition result that may be inputted as necessary from the voice recognition unit 154 (step S110). The subsequent processing branches in accordance with the operation event determined here.

In step S115, the operation control unit 172 determines whether a new set of UI objects is to be displayed (step S115). As examples, if a UI image is to be newly displayed or if the operation event described with reference to Fig. 26 or Fig. 28 has been detected, the operation control unit 172 determines that a new set of UI objects is to be displayed. If it is determined here that a new set of UI objects is not to be displayed, the UI objects that were displayed in the previous frame are maintained and the processing proceeds to step S120. Meanwhile, if it is determined here that a new set of UI objects is to be displayed, the processing proceeds to step S135.

In step S120, the operation control unit 172 determines whether any of the UI objects has been selected (step S120). As one example, if the operation event described with reference to Fig. 22, Fig. 23, Fig. 27, or Fig. 31 has been detected, the operation control unit 172 determines that a UI object has been selected. If it is determined here that a UI object has been selected, the processing proceeds to step S125. If not, the processing proceeds to step S145.

In step S125, in response to an operation event that selects a UI object, the operation control unit 172 causes the application unit 140 to carry out a process associated with the selected UI object (step S125). By increasing the operation frequency of the selected UI object for example, the priority setting unit 174 then updates the priority data (step S130). After this, the processing returns to step S100.

In step S135, the operation control unit 172 sets up the new set of UI objects (step S135). As one example, the operation control unit 172 specifies a set of UI objects belonging to a different category to the set of UI objects that were displayed in the previous frame. The operation control unit 172 then lays out the UI objects included in the new set at the default display positions (step S140). After this, the processing proceeds to step S145.

In step S145, the operation control unit 172 determines whether an operation object has been newly recognized (step S145). As examples, if the gesture G0 described with reference to Figs. 15 to 18 has been detected, the operation control unit 172 determines that an operation object has been newly recognized. Here, if it is determined that an operation object has been newly recognized, the processing proceeds to step S150. If not, the processing in step S150 is skipped.

In step S150, the operation control unit 172 sets the approach speeds and other attributes of the UI objects (step S150). As one example, the operation control unit 172 may set the approach speed toward the user of an object with a higher priority at a higher speed. The operation control unit 172 may also set the display size of an object with a higher priority at a larger size.

As shown over in Fig. 35, the operation control unit 172 then determines whether the display positions of the UI objects should be updated (step S155). As one example, if the gesture G2 described with reference to Fig. 24 has been detected, the operation control unit 172 determines that updating of the display positions is not necessary. Here, if it is determined that the display positions of the UI objects should be updated, the processing proceeds to step S160. If not, the processing in steps S160 and S165 is skipped.

In step S160, the operation control unit 172 updates the display positions of UI objects related to a special event (step S160). As one example, if the operation control unit 172 has detected the operation event described with reference to Fig. 25, the display position of the designated UI object is moved away from the user. Also, if the gesture G3a described with reference to Fig. 24 has been detected, the operation control unit 172 rotates the display positions of the UI objects.

The operation control unit 172 then updates the display positions of other UI objects based on their approach speeds (step S165). As one example, the display positions of UI objects that have faster approach speeds may be moved much closer toward the user.

After this, the operation control unit 172 generates a UI image by superimposing at least one UI object on the input image in accordance with the display positions and attributes decided via the processing so far (step S170). The operation control unit 172 displays an output image including a generated UI image on the screen of the display 108 (step S175). After this, the processing returns to step S100.

### <3. Second Embodiment>

As described earlier, the technology according to an embodiment of the present disclosure is not limited to a television apparatus and can be applied to various types of apparatus. For this reason, an example where the technology according to an embodiment of the present disclosure has been applied to the information processing apparatus 200 that includes the internet will now be described as a second embodiment. As was described with reference to Fig. 2, the information processing apparatus 200 is a tablet PC.

### (1) Example Hardware Configuration

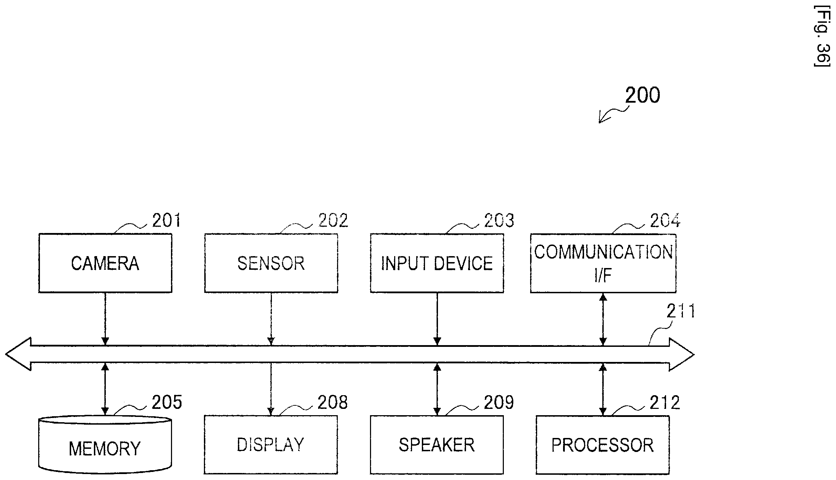

Fig. 36 is a block diagram showing an example hardware configuration of the information processing apparatus 200. As shown in Fig. 36, the information processing apparatus 200 includes the camera 201, the microphone 202, an input device 203, a communication I/F 204, a memory 205, the display 208, a speaker 209, a bus 211, and a processor 212.

The camera 201 includes an image pickup element such as a CCD or a CMOS and picks up images. The images picked up by the camera 201 (frames that construct video) are treated as input images for processing by the information processing apparatus 200.

The sensor 202 may include various sensors such as a measurement sensor, an acceleration sensor, and a gyro sensor. The sensor data generated by the sensor 202 may be used by an application function of an information processing apparatus 200.

The input device 203 is a device used by the user to directly operate the information processing apparatus 200 or to input information into the information processing apparatus 200. As one example, the input device 103 may include a touch panel, buttons, switches, and the like. On detecting a user input, the input device 203 generates an input signal corresponding to the detected user input.

The communication I/F 204 acts as an intermediary for communication between the information processing apparatus 200 and another apparatus. The communication I/F 204 supports an arbitrary wireless communication protocol or wired communication protocol and establishes a communication connection with the other apparatus.

The memory 205 is constructed of a storage medium such as a semiconductor memory or a hard disk drive and stores programs and data for processing by the information processing apparatus 200, as well as content data. Note that some or all of the programs and data may not be stored by the memory 205 and instead may be acquired from an external data source (as examples, a data server, network storage, or an externally attached memory).

The display 208 has a screen constructed of an LCD, an OLED, or the like and displays images generated by the information processing apparatus 200. As one example, the same UI images as those described in the first embodiment may be displayed on the screen of the display 208.

The speaker 209 has a diaphragm and circuit elements such as an amplifier and outputs audio based on an output audio signal generated by the information processing apparatus 200. The volume of the speaker 209 is variable.

The bus 211 connects the camera 201, the microphone 202, the input device 203, the communication I/F 204, the memory 205, the display 208, the speaker 209, and the processor 212 to each other.

As examples, the processor 112 may be a CPU or a DSP. By executing a program stored in the memory 205 or on another storage medium, in the same way as the processor 112 of the information processing apparatus 100 according to the first embodiment, the processor 212 causes the information processing apparatus 200 to function in various ways. Aside from differences in the application function, the configuration of the logical functions realized by the memory 205 and the processor 212 of the information processing apparatus 200 may be the same as the configuration of the information processing apparatus 100 illustrated in Fig. 4.

### (2) Example Operation Scenario

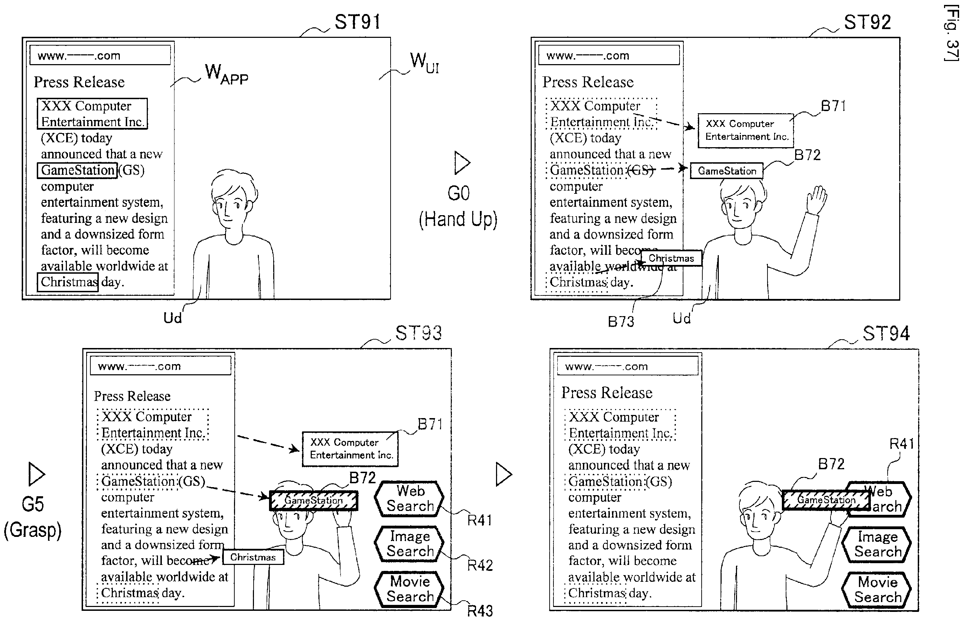

Fig. 37 is a diagram useful in explaining an example operation scenario for the second embodiment. In Fig. 37, four output images ST91 to ST94 are shown along a time axis. In this scenario, the respective output images are composed of an application image W_{APP} of an Internet browser in the left half and an UI image W_{UI} in the right half.

In the output image ST91, the application image W_{APP} includes text written in a Web page. In Fig. 37, three keywords "XXX Computer Entertainment Inc.", "GameStation", and "Christmas" extracted from the text of a Web page are surrounded by rectangular frames. The user Ud appears in the UI image WUI and a mirror image display is realized.

The next output image ST92 may be displayed after the hand of the user Ud that is the operation object is recognized, for example. In the output image ST92, UI objects B71 to B73 are superimposed on the UI image. The UI object B71 is associated with the keyword "XXX Computer Entertainment Inc.". The UI object B72 is associated with the keyword "GameStation". The UI object B73 is associated with the keyword "Christmas".

In the next output image ST93, the user Ud's hand coincides with the UI object B72. Three screen regions R41, R42, and R43 are set in the UI image. The screen region R41 is associated with a Web search (text search) process. The screen region R42 is associated with an image search process. The screen region R43 is associated with a movie search process.

In the next output image ST94, the UI object B72 has moved so as to track movement of the user Ud's hand and has moved to a position that coincides with the screen region R41. In response to such operation event, the operation control unit 172 of the information processing apparatus 200 causes the application unit 140 to carry out a Web search function that uses the keyword "Gamestation" shown by the UI object B72.

### <4. Conclusion>

Embodiments of the present disclosure have been described in detail so far with reference to Figs. 1 to 37. According to the embodiments described above, a plurality of UI objects are displayed in a UI image that displays a mirror image of the user and, in UI in which operation of a UI object is controlled based on an image recognition result, the display positions of UI objects that are displayed before an operation object such as the user's hand is recognized approach toward the user after such operation object has been recognized. Accordingly, since the limited screen region in the vicinity of the user is not filled by the low number of UI objects, it is possible to avoid a drop in usability due to the screen being crowded.

Also, according to the embodiments described above, the mode of approach toward the user of the UI objects may vary according to the priorities set for the respective UI objects. Accordingly, the user is capable of rapidly operating a UI object that has a higher priority (as examples, a UI object operated with higher frequency or a UI object determined to be suited to the user).

According to the embodiments described above, various operation events triggered by user gestures may be realized. Accordingly, the user is capable of flexibly operating an information appliance using UI objects that have approached the vicinity of the user, even when the user does not have a remote controller or other physical operation device.

Note that the series of processes carried out by the various apparatuses described as embodiments of the present disclosure are typically realized using software. As one example, programs composed of software that realizes such series of processes are stored in advance on a storage medium (non-transitory medium) provided internally in or externally to such apparatuses. As one example, during execution, such programs are then written into RAM (Random Access Memory) and executed by a processor such as a CPU.

Although preferred embodiments of the present disclosure are described in detail above with reference to the appended drawings, the technical scope of the disclosure is not limited thereto. It should be understood by those skilled in the art that various modifications, combinations, sub-combinations and alterations may occur depending on design requirements and other factors insofar as they are within the scope of the appended claims.

### Reference Signs List

100, 200 Information processing apparatus
120 image acquisition unit
140 application unit
152 image recognition unit
154 voice recognition unit
172 operation control unit
174 priority setting unit

## Claims

1. An information processing system comprising:
an image acquisition unit (120) configured to acquire an image of a scene,
a display screen (108, 208),
an image recognition unit (152) configured to recognize in the acquired image an operation object initiated by a user , to recognize in the acquired image the face of the user and to identify the user, and
processing circuitry (112) configured to
control the display screen (108, 208) to display the acquired image as a mirror image of the scene,
control movements of UI objects (Obj; B11-26) on the display screen (108, 208) from a respective pre-recognition position towards a respective post-recognition position in response to recognition of the operation object, wherein the movements of the UI objects (Obj; B11-26) comprises the UI objects (Obj; B11-26) approaching towards a displayed position of the recognized operation object displayed on the display screen (108), wherein
the processing circuitry is configured to vary a mode of approach of each UI object in accordance with a parameter related to the respective UI object, and
the mode of approach of the UI objects is non-uniform such that respective speeds of approach are different for different UI objects, wherein
the parameter is a priority depending on the identification of the user.

2. The information processing system of claim 1, wherein the priority is based on an operation frequency of each UI object or a recommendation.

3. The information processing system of claim 1, wherein
a trigger for the movement of one UI object and a trigger for the movement of another UI object are different.

4. The information processing system of claim 3, wherein
a first detected gesture triggers a movement of one of the UI objects and a second detected gesture triggers a movement of another UI object.

5. The information processing system of claim 3, wherein
the UI objects are further displayed in a ring around the operation object.

6. The information processing system of claim 1, wherein
the post-recognition position for a UI object is closer to the operation object when the UI object is identified as a higher priority than the different UI object, and further from the operation object when the UI object is identified as a lower priority than the different UI object.

7. Information processing system according to any of the preceding claims, wherein
the operation object is selected from the group consisting of: a body part of the user and an object held by the user.

8. The information processing system of claim 1, wherein
the post-recognition position of the UI objects to the operation object is a closer distance than the pre-recognition position such that the UI objects move toward the operation object.

9. An information processing method comprising:
acquiring, with an image acquisition unit (120), an image of a scene,
with an image recognition unit (152), recognizing in the acquired image an operation object initiated by a user, recognizing in the acquired image the face of the user and identifying the user,
controlling with processing circuitry the display screen (108, 208) to display the acquired image as a mirror image of the scene, and
controlling with processing circuitry movements of UI objects (Obj; B11-26) on a display screen (108, 208) from a respective pre-recognition position towards a respective post-recognition position in response to recognition of the operation object, wherein the movements of the UI objects (Obj; B11-26) comprises the UI objects (Obj; B11-26) approaching towards a displayed position of the recognized operation object displayed on the display screen (108), wherein
a mode of approach of each UI object is varied in accordance with a parameter related to the respective UI object, and
the mode of approach of the UI objects is non-uniform such that respective speeds of approach are different for different UI objects, wherein
the parameter is a priority depending on the identification of the user.

10. A non-transitory computer readable medium having computer readable instructions that when executed by a processing circuitry perform a method according to claim 9.

## Patentansprüche

1. Informationsverarbeitungssystem, das Folgendes umfasst:
eine Bilderfassungseinheit (120), die dazu ausgelegt ist, ein Bild einer Szene zu erfassen,
einen Anzeigebildschirm (108, 208),
eine Bilderkennungseinheit (152), die dazu ausgelegt ist, in dem erfassten Bild ein durch einen Benutzer initiiertes Operationsobjekt zu erkennen, in dem erfassten Bild das Gesicht des Benutzers zu erkennen und den Benutzer zu identifizieren, und
eine Verarbeitungsschaltung (112), die für Folgendes ausgelegt ist:
Steuern des Anzeigebildschirms (108, 208), um das erfasste Bild als ein Spiegelbild der Szene anzuzeigen,
Steuern der Bewegungen von UI-Objekten (Obj; B11-26) auf dem Anzeigebildschirm (108, 208) von einer jeweiligen Vorerkennungsposition in Richtung einer jeweiligen Nacherkennungsposition in Reaktion auf die Erkennung des Operationsobjekts,
wobei die Bewegungen der UI-Objekte (Obj; B11-26) die UI-Objekte (Obj; B11-26) umfassen, die sich einer angezeigten Position des auf dem Anzeigebildschirm (108) angezeigten erkannten Operationsobjekts nähern,
wobei die Verarbeitungsschaltung dazu ausgelegt ist, eine Annäherungsart jedes UI-Objekts im Einklang mit einem auf das jeweilige UI-Objekt bezogenen Parameter zu variieren, und
die Annäherungsart der UI-Objekte uneinheitlich ist, so dass jeweilige Annäherungsgeschwindigkeiten für unterschiedliche UI-Objekte unterschiedlich sind,
wobei der Parameter eine von der Identifikation des Benutzers abhängige Priorität ist.

2. Informationsverarbeitungssystem nach Anspruch 1,
wobei die Priorität auf einer Betriebsfrequenz jedes UI-Objekts oder einer Empfehlung basiert.

3. Informationsverarbeitungssystem nach Anspruch 1,
wobei ein Auslöser für die Bewegung eines UI-Objekts und ein Auslöser für die Bewegung eines anderen UI-Objekts unterschiedlich sind.

4. Informationsverarbeitungssystem nach Anspruch 3,
wobei eine erste erkannte Geste eine Bewegung von einem der UI-Objekte auslöst, und eine zweite erkannte Geste eine Bewegung eines anderen UI-Objekts auslöst.

5. Informationsverarbeitungssystem nach Anspruch 3,
wobei die UI-Objekte ferner in einem Ring um das Operationsobjekt angezeigt werden.

6. Informationsverarbeitungssystem nach Anspruch 1,
wobei die Nacherkennungsposition für ein UI-Objekt näher an dem Operationsobjekt liegt, wenn das UI-Objekt als eine höhere Priorität als das unterschiedliche UI-Objekt identifiziert wird, und weiter von dem Operationsobjekt entfernt liegt, wenn das UI-Objekt als eine niedrigere Priorität als das unterschiedliche UI-Objekt identifiziert wird.

7. Informationsverarbeitungssystem gemäß einem der vorhergehenden Ansprüche,
wobei das Operationsobjekt aus der Gruppe ausgewählt wird, die aus Folgendem besteht: einem Körperteil des Benutzers und einem von dem Benutzer gehaltenen Objekt.

8. Informationsverarbeitungssystem nach Anspruch 1,
wobei die Nacherkennungsposition der UI-Objekte zu dem Operationsobjekt einen geringeren Abstand als die Vorerkennungsposition hat, so dass die UI-Objekte sich auf das Operationsobjekt zu bewegen.

9. Informationsverarbeitungsverfahren, das Folgendes umfasst:
Erfassen, mit einer Bilderfassungseinheit (120), eines Bilds einer Szene mit einer Bilderkennungseinheit (152), die in dem erfassten Bild ein durch einen Benutzer initiiertes Operationsobjekt erkennt,
Erkennen, in dem erfassten Bild, das Gesicht des Benutzers und Identifizieren des Benutzers,
Steuern, mit der Verarbeitungsschaltung, des Anzeigebildschirms (108, 208), um das erfasste Bild als ein Spiegelbild der Szene anzuzeigen, und
Steuern, mit der Verarbeitungsschaltung, der Bewegungen von UI-Objekten (Obj; B11-26) auf dem Anzeigebildschirm (108, 208) von einer jeweiligen Vorerkennungsposition in Richtung einer jeweiligen Nacherkennungsposition in Reaktion auf die Erkennung des Operationsobjekts,
wobei die Bewegungen der UI-Objekte (Obj; B11-26) die UI-Objekte (Obj; B11-26) umfassen, die sich einer angezeigten Position des auf dem Anzeigebildschirm (108) angezeigten erkannten Operationsobjekts nähern,
wobei eine Annäherungsart jedes UI-Objekts im Einklang mit einem auf das jeweilige UI-Objekt bezogenen Parameter variiert wird, und
die Annäherungsart der UI-Objekte uneinheitlich ist, so dass jeweilige Annäherungsgeschwindigkeiten für unterschiedliche UI-Objekte unterschiedlich sind,
wobei der Parameter eine von der Identifikation des Benutzers abhängige Priorität ist.

10. Nichtflüchtiges computerlesbares Medium, das computerlesbare Anweisungen enthält, die, wenn sie von einer Verarbeitungsschaltung ausgeführt werden, ein Verfahren gemäß Anspruch 9 durchführen.

## Revendications

1. Système de traitement d'informations, comprenant :
une unité d'acquisition d'image (120) configurée pour acquérir une image d'une scène,
un écran d'affichage (108, 208),
une unité de reconnaissance d'image (152) configurée pour reconnaître dans l'image acquise un objet d'opération déclenché par un utilisateur, afin de reconnaître dans l'image acquise le visage de l'utilisateur et d'identifier l'utilisateur, et
un circuit de traitement (112) configuré pour commander l'écran d'affichage (108, 208) afin d'afficher l'image acquise sous la forme d'une image en miroir de la scène,
commander des mouvements d'objets d'UI (d'Interface Utilisateur) (Obj ; B11-26) sur l'écran d'affichage (108, 208) depuis une position pré-reconnaissance respective vers une position post-reconnaissance respective en réponse à la reconnaissance de l'objet d'opération, dans lequel les mouvements des objets d'UI (Obj ; B11-26) comprennent le rapprochement des objets d'UI (Obj ; B11-26) d'une position affichée de l'objet d'opération reconnu affiché sur l'écran d'affichage (108), dans lequel
le circuit de traitement est configuré pour faire varier le mode de rapprochement de chaque objet d'UI en fonction d'un paramètre lié à l'objet d'UI respectif, et
le mode de rapprochement des objets d'UI est non uniforme de sorte que les vitesses de rapprochement respectives sont différentes pour différents objets d'UI, dans lequel le paramètre est une priorité qui dépend de l'identification de l'utilisateur.

2. Système de traitement d'informations selon la revendication 1, dans lequel la priorité est basée sur une fréquence d'opération de chaque objet d'UI ou sur une recommandation.

3. Système de traitement d'informations selon la revendication 1, dans lequel
un déclencheur du mouvement d'un objet d'UI et un déclencheur du mouvement d'un autre objet d'UI sont différents.

4. Système de traitement d'informations selon la revendication 3, dans lequel
un premier geste détecté déclenche un mouvement de l'un des objets d'UI et un second geste détecté déclenche un mouvement d'un autre objet d'UI.

5. Système de traitement d'informations selon la revendication 3, dans lequel
les objets d'UI sont en outre affichés dans un anneau autour de l'objet d'opération.

6. Système de traitement d'informations selon la revendication 1, dans lequel
la position post-reconnaissance d'un objet d'UI est plus proche de l'objet d'opération lorsque l'objet d'UI est identifié comme ayant une priorité plus élevée que l'objet d'UI différent, et plus éloignée de l'objet d'opération lorsque l'objet d'UI est identifié comme ayant une priorité plus faible que l'objet d'UI différent.

7. Système de traitement d'informations selon l'une des revendications précédentes, dans lequel
l'objet d'opération est sélectionné dans le groupe constitué par : une partie du corps de l'utilisateur et un objet tenu par l'utilisateur.

8. Système de traitement d'informations selon la revendication 1, dans lequel
la position post-reconnaissance des objets d'UI par rapport à l'objet d'opération est à une distance plus proche que la position pré-reconnaissance, de sorte que les objets d'UI se déplacent vers l'objet d'opération.

9. Procédé de traitement d'informations comprenant :
l'acquisition, au moyen d'une unité d'acquisition d'image (120), d'une image d'une scène,
au moyen d'une unité de reconnaissance d'image (152), la reconnaissance dans l'image acquise d'un objet d'opération déclenché par un utilisateur,
la reconnaissance dans l'image acquise du visage de l'utilisateur et l'identification de l'utilisateur,
la commande, au moyen d'un circuit de traitement, de l'écran d'affichage (108, 208) afin d'afficher l'image acquise sous la forme d'une image en miroir de la scène, et
la commande, au moyen d'un circuit de traitement, de mouvements d'objets d'UI (Obj ; B11-26) sur un écran d'affichage (108, 208) depuis une position de pré-reconnaissance respective vers une position de post-reconnaissance respective en réponse à la reconnaissance de l'objet d'opération, dans lequel les mouvements des objets d'UI (Obj ; B11-26) comprennent le rapprochement des objets d'UI (Obj ; B11-26) d'une position affichée de l'objet d'opération reconnu affiché sur l'écran d'affichage (108), dans lequel
un mode de rapprochement de chaque objet d'UI est amené à varier en fonction d'un paramètre lié à l'objet d'UI respectif, et
le mode de rapprochement des objets d'UI est non uniforme, de sorte que les vitesses de rapprochement respectives sont différentes pour différents objets d'UI, dans lequel le paramètre est une priorité qui dépend de l'identification de l'utilisateur.

10. Support non transitoire lisible par ordinateur comportant des instructions lisibles par ordinateur qui, lorsqu'elles sont exécutées par un circuit de traitement, mettent en œuvre un procédé selon la revendication 9.
